(19) Europäisches Patentamt
European Patent Office
Office européen des brevets

(11) **EP 4 737 856 A1**

(12) **EUROPEAN PATENT APPLICATION**
published in accordance with Art. 153(4) EPC

(43) Date of publication:
06.05.2026 Bulletin 2026/19

(21) Application number: 23943571.2

(22) Date of filing: 27.06.2023

(51) International Patent Classification (IPC):
*G01C 21/12* (2006.01)

(52) Cooperative Patent Classification (CPC):
G01C 21/12

(86) International application number:
PCT/JP2023/023759

(87) International publication number:
WO 2025/004170 (02.01.2025 Gazette 2025/01)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: MITSUBISHI ELECTRIC
CORPORATION
Chiyoda-ku
Tokyo 100-8310 (JP)

(72) Inventors:
• FUJITA, Masayasu
Tokyo 100-8310 (JP)
• TAKIGUCHI, Junichi
Tokyo 100-8310 (JP)
• KANEKO, Koji
Tokyo 100-8310 (JP)

(74) Representative: Hoffmann Eitle
Patent- und Rechtsanwälte PartmbB
Arabellastraße 30
81925 München (DE)

(54) **AUTOMATIC DOCKING DEVICE, AUTOMATIC DOCKING SYSTEM, AUTOMATIC DOCKING METHOD, AND AUTOMATIC DOCKING PROGRAM**

(57) An automatic docking device (100) includes a point cloud generation unit (120) and a navigation scenario generation unit (140). Based on a result of positioning of the position and the attitude of an object vessel by a GNSS/INS integrated navigation device (200), the point cloud generation unit (120) transforms relative coordinates corresponding to each point of a point cloud that corresponds to a result of ranging in an object berth by an object radar into absolute coordinates, and based on the absolute coordinates corresponding to each point transformed, generates an object map indicating a navigable area in the object berth, and indicating the absolute coordinates. The navigation scenario generation unit (140) generates a plan to guide the object vessel so as to reach a target position with a target attitude based on the object map, and the position and the attitude of the object vessel positioned, when the target position and the target attitude of the object vessel in the object berth are designated based on the object map.

Fig. 2

## Description

## Technical Field

The present disclosure relates to an automatic docking device, an automatic docking system, an automatic docking method, and an automatic docking program.

## Background Art

In a conventional technique related to automatic docking of vessels, GNSS (Global Navigation Satellite System) positioning is used when the location of a vessel is far from the docking position. In this case, GNSS positioning is susceptible to the influence of multipath. Additionally, there may be many structures around the docking position. Therefore, when a vessel gets close to the docking position, the vessel switches to automatic navigation in accordance with a LiDAR (Light Detection And Ranging, or an optical sensor). Patent Literature 1 discloses an automatic docking device using LiDAR.

## Citation List

## Patent Literature

Patent Literature 1: JP 2022-106753 A

## Summary of Invention

## Technical Problem

According to the technique disclosed in Patent Literature 1, relative coordinates are used after switching to automatic navigation using LiDAR. Thus, a problem with the technique is that it is impossible to generate a navigation scenario for automatic docking unless a vessel moves to a point where a map can be generated using LiDAR.

Further, a user needs to input the docking position according to the technique. Therefore, another problem with the technique is that it is troublesome to set the docking position every time, particularly in a case where the docking position is designated, as with cruisers.

The present disclosure aims at generating a map indicating absolute coordinates, and automatically guiding vessels in berthing based on the map indicating the absolute coordinates generated, in an automatic docking technique for vessels.

## Solution to Problem

An automatic docking device according to the present disclosure is an automatic docking device to control, in an object berth, automatic docking of an object vessel that includes a GNSS (Global Navigation Satellite System)/INS (Inertial Navigation System) integrated navigation device, and an object radar to perform a ranging of a relative position of an object existing in a surrounding with an electromagnetic wave, the automatic docking device comprising:

a point cloud generation unit to transform a relative coordinate corresponding to each point of a point cloud corresponding to a result of the ranging in the object berth by the object radar into an absolute coordinate, based on a result of a positioning of a position and an attitude of the object vessel by the GNSS/INS integrated navigation device, and to generate an object map being a map indicating a navigable area in the object berth and indicating an absolute coordinate, based on the absolute coordinate corresponding to the each point transformed; and
a navigation scenario generation unit to generate a plan to guide the object vessel so as to reach a target position with a target attitude based on the object map, and the position and the attitude of the object vessel positioned by the GNSS/INS integrated navigation device when the target position and the target attitude of the object vessel in the object berth are designated based on the object map.

## Advantageous Effects of Invention

According to the present disclosure, a point cloud generation unit generates an object map being a map indicating a navigable area in an object berth, and indicating absolute coordinates, based on observation results by an object radar. A navigation scenario generation unit generates a plan to guide an object vessel so as to reach a target position with a target attitude based on the object map. The plan generated may be used to provide guidance for automatic docking of the object vessel. Therefore, according to the present disclosure, it is possible to generate the map indicating the absolute coordinates, and to provide guidance for automatic docking based on the map indicating the absolute coordinates generated in the automatic docking technique of vessels.

**Brief Description of Drawings**

Fig. 1 is a diagram illustrating a configuration example of an automatic docking system 90 according to First Embodiment;

Fig. 2 is a diagram illustrating an example of a functional configuration of the automatic docking system 90 according to First Embodiment;

Fig. 3 is a diagram illustrating an example of a functional configuration of the automatic docking system 90 according to First Embodiment;

Fig. 4 is a diagram describing processing of a velocity profile unit 131 according to First Embodiment;

Fig. 5 is a diagram describing processing of a radar/Body coordinate transformation unit 132 according to First Embodiment;

Fig. 6 is a diagram illustrating an example of a functional configuration of a position and attitude orientation device 300 according to First Embodiment;

Fig. 7 is a diagram describing a coordinate system;

Fig. 8 is a diagram illustrating an example of a hardware configuration of an automatic docking device 100 according to First Embodiment;

Fig. 9 is a flowchart indicating an operation of the position and attitude orientation device 300 according to First Embodiment;

Fig. 10 is a diagram describing an algorithm of 3-degrees-of-freedom two-dimensional navigation according to First Embodiment;

Fig. 11 is a diagram describing an algorithm of 6-degrees-of-freedom three-dimensional navigation according to First Embodiment;

Fig. 12 is a flowchart indicating an operation of the automatic docking system 90 according to First Embodiment;

Fig. 13 is a diagram describing a use case 1 according to First Embodiment;

Fig. 14 is a diagram describing the use case 1 according to First Embodiment;

Fig. 15 is a diagram describing a use case 2 according to First Embodiment;

Fig. 16 is a diagram describing the use case 2 according to First Embodiment;

Fig. 17 is a diagram describing the use case 2 according to First Embodiment;

Fig. 18 is a diagram describing the use case 2 according to First Embodiment;

Fig. 19 is a diagram describing the use case 2 according to First Embodiment;

Fig. 20 is a diagram describing the use case 2 according to First Embodiment; and

Fig. 21 is a diagram illustrating an example of a hardware configuration of the automatic docking device 100 according to a variation of First Embodiment.

**Description of Embodiments**

In the description and drawings in the embodiment, the same and the corresponding elements are denoted by the same reference symbols. The description of the elements denoted by the same reference symbols is omitted or simplified appropriately. The arrows in the diagrams mainly describe the flows of data or the flows of processing. Further, "unit" may be read as "device", "circuit", "step", "procedure", "processing" or "circuitry" appropriately.

First Embodiment.

Hereinafter, a description will be given on the present embodiment in detail with reference to diagrams.

The present embodiment aims at automation of docking of a vessel such as a large leisure cruiser, a sightseeing ship and the like at a pier in a marina in returning to a port.

The vessel being an object in the present embodiment is equipped with an automatic navigation system. Therefore, the vessel is capable of automatically navigating to an arbitrary point by specifying a waypoint. In addition, the vessel is equipped with various sensors, such as a millimeter wave radar, a GNSS (Global Navigation Satellite System) receiver, an IMU (Inertial Measurement Unit) and the like.

***Description of Configuration***

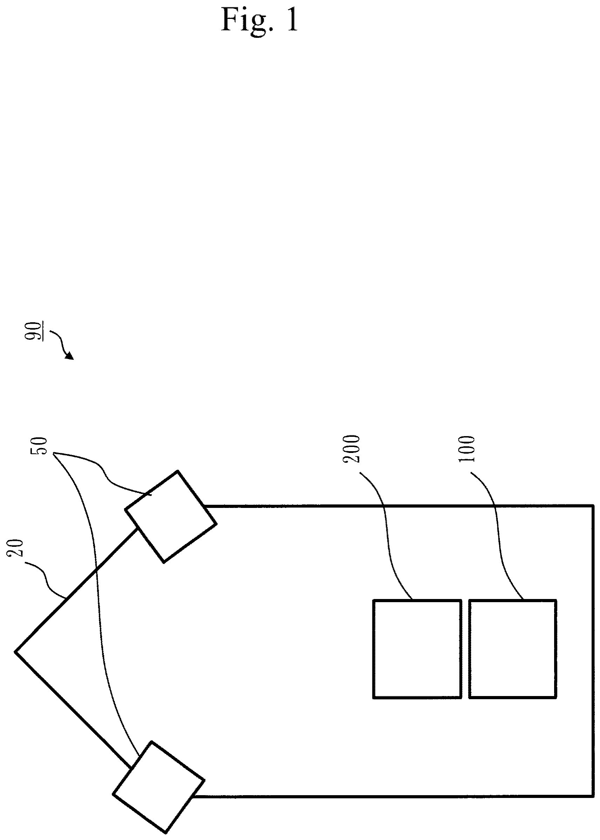

Fig. 1 illustrates a configuration example of an automatic docking system 90 according to the present embodiment. As illustrated in Fig. 1, the automatic docking system 90 includes an object vessel 20. The object vessel 20 corresponds to a movable body. The object vessel 20 includes a millimeter wave radar 50, an automatic docking device 100, and a GNSS/INS (Inertial Navigation System) integrated navigation device 200. The object vessel 20 is a small leisure boat, a general cruiser, or a high-end cruiser with two engines, for example. The object vessel 20 may include any number of the millimeter wave radars 50.

The automatic docking system 90 includes "millimeter wave radar" with which the detection capability is not deteriorated even in a bad weather, "GNSS/INS Integrated Navigation Device" which can reduce the influence of multipath, and "navigation scenario generation device" to control automatic navigation.

The millimeter wave radar 50 is, as a concrete example, a radar which adopts an FMCW (frequency modulated continuous wave) system with a bandwidth of 76 to 77GHz, or 77 to 81GHz, and is a radar which can measure each of the distance, velocity and angular velocity. The millimeter wave radar 50 is also called a millimeter wave sensor.

In the present embodiment, automatic docking is realized in two stages of a map generation stage by the millimeter wave radar 50, and a guidance stage using the position and attitude indicated in the positioning result by a GNSS/INS integrated navigation device 200. The specific examples of controlling guidance for automatic docking are described in Reference Literature 1 and Reference Literature 2.

[Reference Literature 1]
WO2018-100751 A1 pamphlet
[Reference Literature 2]
JP 2020-059403 A

In the present embodiment, in order to reduce oscillation due to ocean waves, spatial stabilization for the millimeter wave radar 50 is executed by using the azimuth and the attitude angle indicated in the positioning result by the GNSS/INS integrated navigation device 200. Spatial stabilization for the millimeter wave radar 50 is to apply the attitude angle indicated in the positioning result by the GNSS/INS integrated navigation device 200 to the data of the millimeter wave radar 50, and to measure a horizontal direction by the millimeter wave radar 50. The horizontal direction is represented by the X-axis and the Y-axis.

The map is generated in real time during the execution of berthing sequence. The berthing sequence includes an approach step, a map generation step, a route planning step, and a guidance control step. In the approach step, it is assumed that the object vessel 20 navigates at a low speed, and a relative angle of the object vessel 20 with respect to a quay shall be between 45° and 60°. The map is a linear shape map, which may include obstacles such as other vessels mooring, for example.

The coordinate system of the map is, for example, an absolute coordinate system (UTM (Universal Transverse Mercator) coordinate) that includes obstacles such as other vessels.

To ensure the accuracy and reliability of map, when the map is generated, the map shall satisfy, for instance, that the distance measured between the millimeter wave radar 50 and the docking berth is 21m or below, and that the docking berth exists within an angle range of -45° to +45° from the center of the antenna of the millimeter wave radar 50. The condition related to the measured distance corresponds to a ranging reference distance condition. The condition related to the range of the angle corresponds to a ranging reference angle condition.

The map format is composed of polygonal-line approximation points representing a docking berth and a vessel moored at the docking berth, for example, and which are polygonal-line approximation points on a horizontal surface seen from the object vessel 20 in order to automate route planning. The map format is constituted by node numbers and XY coordinates.

In the present embodiment, the positioning accuracy is ensured by integrating the millimeter wave radar 50 and the GNSS/INS integrated navigation device 200 as a countermeasure for invisibility in a river or under a bridge, etc. from satellites.

In the present embodiment, in the GNSS/INS integrated navigation device 200, even when it is invisible from satellites, the positioning accuracy is ensured by using the millimeter wave radar 50 instead of the GNSS and by measuring the distance and the azimuth from the object vessel 20 to the quay.

In the present embodiment, a stop decision is made using the millimeter wave radar 50, integration of internal errors is prevented, and the positioning accuracy is ensured.

In the present embodiment, attitude errors may be reduced by using a magnetic compass and measuring the absolute direction.

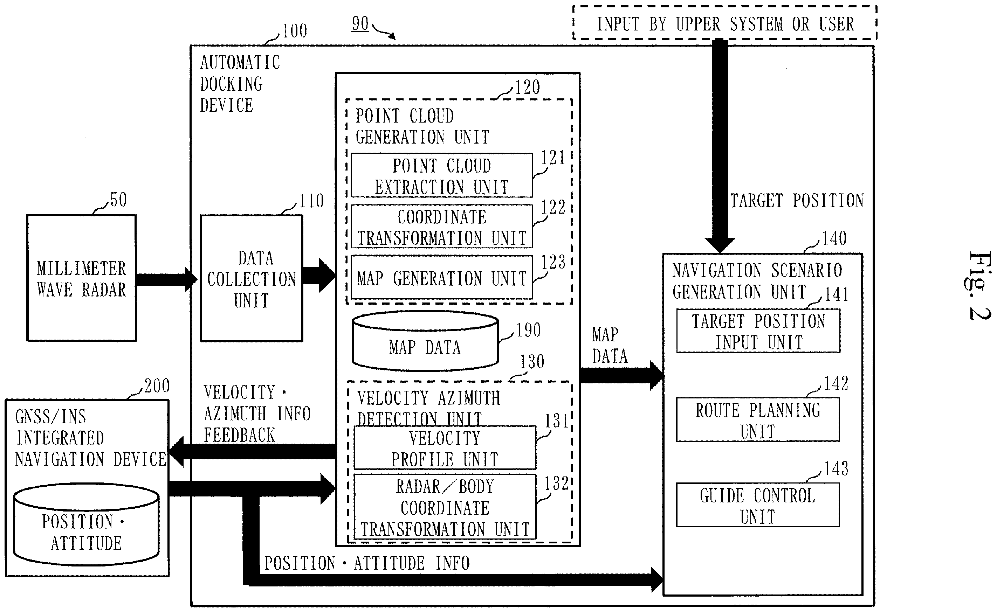

Fig. 2 illustrates an example of a functional configuration of the automatic docking system 90 according to the present embodiment.

The automatic docking device 100 includes the object vessel 20, as demonstrated in Fig. 2. The automatic docking device 100 includes a data collection unit 110, a point cloud generation unit 120, a velocity azimuth detection unit 130, and a navigation scenario generation unit 140. Moreover, the automatic docking device 100 stores map data 190.

The automatic docking device 100 controls automatic docking of the object vessel 20 that includes the GNSS/INS integrated navigation device 200 and an object radar in the object berth. The object radar is a radar that performs ranging of relative positions of objects that exist in the surrounding area using electromagnetic waves. The object radar may specifically be a LiDAR (Light Detection And Ranging) or the millimeter wave radar 50. The object berth is also referred to as a marina berth. The object berth may also be a home port berth or a service berth.

However, with the LiDAR, the detection capability may be degraded under adverse weather conditions, which poses a risk of collisions or the like due to an automatic navigation unfeasible state or errors in detection during automatic navigation, and the like. Furthermore, in the positioning by the LiDAR, since some kind of object is detected and the self position is relatively calculated, there must be any detectable object in the surrounding area. Meanwhile, the process is simplified in using the millimeter wave radar 50 in comparison with the case of using the LiDAR. For instance, when the millimeter wave radar 50 is used, there is no need to differentiate between quays and vessels.

The data collection unit 110 collects data that represents observation results by the millimeter wave radar 50.

The point cloud generation unit 120 generates a point cloud based on the data collected by the data collection unit 110. The point cloud corresponds to a quay wall, a pier, and obstacles, as concrete examples. The point cloud generation unit 120 includes a point cloud extraction unit 121, a coordinate transformation unit 122 and a map generation unit 123.

The point cloud extraction unit 121 extracts the point cloud from the data collected by the data collection unit 110. The coordinates of the point cloud extracted are relative coordinates.

The coordinate transformation unit 122 transforms the coordinates of the point cloud extracted by the point cloud extraction unit 121 into absolute coordinates.

The map generation unit 123 generates a map indicating the absolute coordinates transformed by the coordinate transformation unit 122, and adds the data indicating the map generated to the map data 190.

In other words, the point cloud generation unit 120 transforms relative coordinates corresponding to each point of the point cloud that corresponds to the result obtained by ranging in the object berth by the object radar to absolute coordinates based on the result of positioning of the position and the attitude of the object vessel 20 by the GNSS/INS integrated navigation device 200, and generates an object map being a map indicating the navigable area in the object berth, and indicating absolute coordinates based on the absolute coordinates corresponding to each point transformed. The point cloud extracted by the point cloud extraction unit 121 corresponds to the result of ranging in the object berth by the object radar. When the object radar performs ranging in the object berth, the distance between the object vessel 20 and the quay wall of the object berth may be a distance corresponding to the shape of the object berth. When each point of the point cloud is taken as an object point, the distance between the millimeter wave radar 50 and the object point satisfies the ranging reference distance condition, and the angle formed by the center of the millimeter wave radar 50 and the object point satisfies a ranging reference angle condition typically at the point of time when the ranging is performed for the object point by the millimeter wave radar 50.

The velocity azimuth detection unit 130 includes a velocity profile unit 131 and a radar/Body coordinate transformation unit 132. The Body coordinate is also referred to as a vehicle body coordinate.

The navigation scenario generation unit 140 corresponds to a navigation scenario generation device, and includes a target position input unit 141, a route planning unit 142, and a guide control unit 143.

The target position input unit 141 accepts an input of the target position of the object vessel 20 after the map data 190 is generated. The target position input unit 141 may also accept an input of the target attitude of the object vessel 20 at the target position. The target position input unit 141 may also calculate the target attitude at the target position automatically based on the target position accepted and the map data 190.

The route planning unit 142 generates a plan that indicates a route to guide the object vessel 20 from the current position of the object vessel 20 to the target position accepted by the target position input unit 141. The plan is a plan for the object vessel 20 to reach the target position with the target attitude. At this time, the route planning unit 142 considers the size of the object vessel 20 and the directions in which the object vessel 20 can move. Further, the route planning unit 142 employs a MAKLINK method, which is common as a concrete example. The MAKLINK method is a kind of graphic methods that automatically generate obstacles which are approximated to convex polygons and a route connecting a start with a goal. The route planning unit 142 may also generate multiple waypoints in real time based on the map generated. Each waypoint shows the position and the attitude of the object vessel 20.

The guide control unit 143 controls the object vessel 20 in accordance with the plan generated by the route planning unit 142. For example, the guide control unit 143 controls the position and the attitude of the object vessel 20 so that the position and the attitude of the object vessel 20 follow each waypoint indicated in the plan generated.

In other words, when the target position and the target attitude of the object vessel 20 in the object berth are specified based on the object map, the navigation scenario generation unit 140 generates a plan for guiding the object vessel 20 to reach the target position with the target attitude based on the target map and the position and attitude of the object vessel 20 obtained by positioning by the GNSS/INS integrated navigation device 200. Moreover, the navigation scenario generation unit 140 guides the object vessel 20 in accordance with the plan generated.

The map data 190 is data of a map indicating the surroundings of the object vessel 20 using absolute coordinates, and indicating the location where the object vessel 20 is moored.

The GNSS/INS integrated navigation device 200 transmits positioning data that indicates the position and the attitude of the object vessel 20, to the automatic docking device 100. Further, the GNSS/INS integrated navigation device 200 receives information indicating the velocity and the azimuth of the object vessel 20 as feedback.

The GNSS/INS integrated navigation device 200 corrects the positioning results by the GNSS/INS integrated navigation device 200 based on the velocity and the azimuth observed by the millimeter wave radar 50.

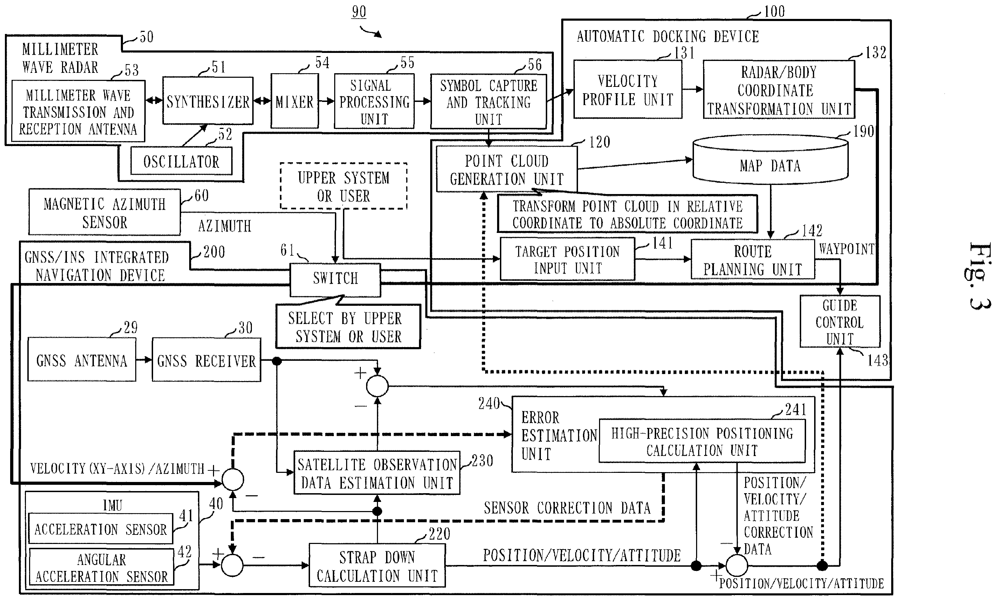

Fig. 3 illustrates an example of the functional configuration of the automatic docking system 90 according to the present embodiment.

As illustrated in Fig. 3, the millimeter wave radar 50 includes a synthesizer 51, an oscillator 52, a millimeter wave transmission and reception antenna 53, a mixer 54, a signal processing unit 55, and a symbol capture and tracking unit 56.

The synthesizer 51 generates a chirp signal that represents the amplitude of the signal from the oscillator 52 as the function of time.

The millimeter wave transmission and reception antenna 53 includes both a transmission antenna and a reception antenna.

The transmission antenna emits a chirp signal. When an object reflects the chirp signal, a chirp signal reflected is generated, and the chirp signal generated is captured by the reception antenna.

The mixer 54 generates an intermediate frequency signal by appropriately combining the transmission signal and the reception signal.

The signal processing unit 55 detects the beat frequency by applying Fourier transformation processing to the intermediate frequency signal. Here, since the beat frequency correlates with the distance, the distance to the target is calculated based on the beat frequency. In addition, by performing the Fourier transformation processing, phase information can be obtained at the same time, and the velocity Doppler can be obtained based on the phase information obtained; therefore, the relative velocity with the target is also calculated based on the result obtained by performing the Fourier transformation processing.

The symbol capture and tracking unit 56 calculates the correlation between a symbolized target and a symbol candidate indicated in a result of scanning based on the intensity of the radar echo (reflection object). If a symbol candidate with a high correlation with the symbolized target is found, the symbol capture and tracking unit 56 maintains tracking of the target by setting a prediction gate at the next scan based on the velocity information of the symbol candidate found. Note that each radar echo is assigned information indicating each symbol ID, the Doppler arrival angle, the Doppler velocity, the echo intensity, and the distance calculated from the integrated velocity from the previous frame.

The velocity profile unit 131 randomly selects two points from the symbols output by the symbol capture and tracking unit 56, and calculates each of a Doppler velocity Vs and a Doppler arrival angle $\alpha$, which are coefficients of $y = Vs \cdot \cos(x-\alpha)$, using the least-squares method. In this case, the velocity profile unit 131 selects coefficients with the most points where the residuals from the curve fitted are within a threshold, as a concrete example. A Random Sample Consensus (RANSAC) algorithm described in Reference Literature 3 is known as a concrete example of a fitting method. By performing fitting of the velocity profile in this manner, it is possible to complement the roughness of each of the angular resolution and velocity resolution of the millimeter wave radar 50, thereby it is possible to improve the accuracy of each of the velocity and the angle.

[Reference Literature 3]

M. Fischler, R. Bolles. "Random sample consensus: a paradigm for model fitting with applications to image analysis and automated cartography.", Communications of the ACM, 1981

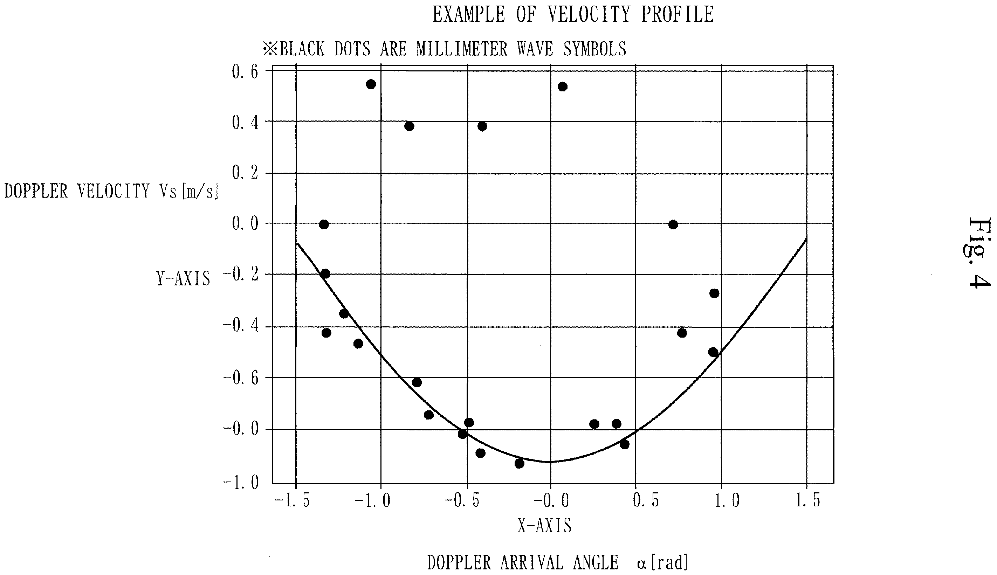

Fig. 4 illustrates a specific example of the result of fitting symbols actually. In Fig. 4, each point indicates a symbol, and the curve indicates fitting results. Despite the relatively large variability in the symbols, the X-axis value at the extremum of the fitting results is obtained as a Doppler arrival angle, and the Y-axis value at the extremum is obtained as a Doppler velocity. Therefore, it is recognizable that each of the variability in angle and the variability in velocity can be reduced although each of the angular resolution and the velocity resolution of the millimeter wave radar 50 is rough.

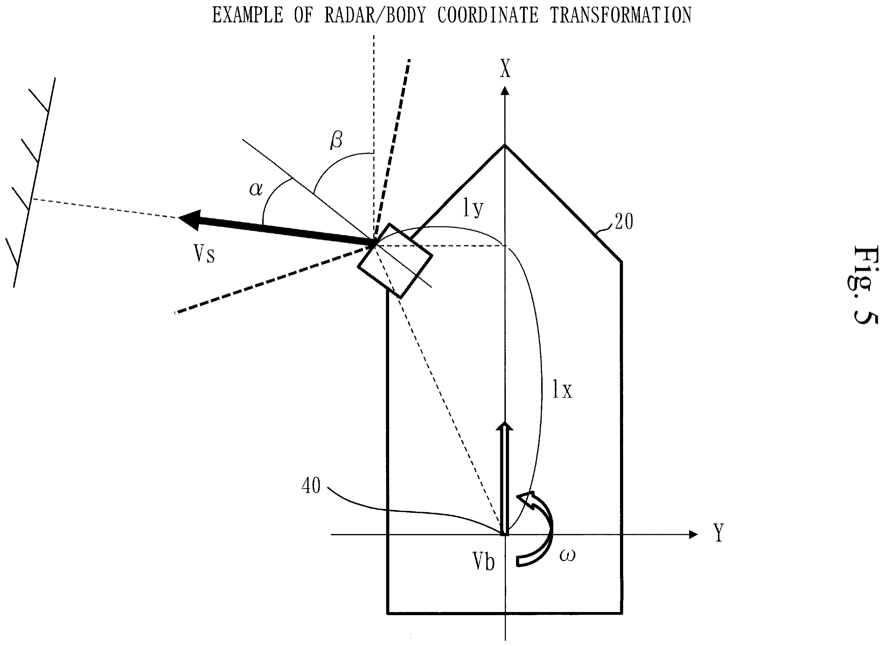

The radar/Body coordinate transformation unit 132 performs coordinate transformation as illustrated in Fig. 5. In Fig. 5, it is assumed that the X-axis and Y-axis are the X-axis and the Y-axis of the Body coordinate system, and the center of an IMU 40 is placed at a position where the X-axis and the Y-axis are orthogonal to each other.

The radar/Body coordinate transformation unit 132 transforms the velocity Vs of the phase center of the radar antenna and its azimuth $\alpha$ into coordinates of the Body coordinate system of the movable body and, as indicated in [Expression 1], transforms them from polar coordinates to Vb (X-axis speed) and $\omega$ (Z-axis angular velocity) on the XY axis. Here, $\beta$ represents the angle formed by the nose and the centerline of the antenna. "ly" represents the Y-axis direction lever arm between the nose and the center of the antenna. "lx" represents the X-axis direction lever arm between the center of the antenna and the center of the IMU 40. The center of the XY axis is the center of the IMU 40. The model of the object vessel 20 is the Ackermann model, for example.

The radar/Body coordinate transformation unit 132 outputs data indicating the velocity and the angular velocity coordinate-transformed to the GNSS/INS integrated navigation device 200.

[Expression 1]

$$Vb = \left( \cos(\alpha + \beta) - \frac{ly}{lx} \sin(\alpha + \beta) \right) Vs$$

$$\omega = \frac{\sin(\alpha + \beta)}{lx} Vs$$

Note that the automatic docking device 100 may include a moving average unit. In a case where the automatic docking device 100 includes the moving average unit, the radar/Body coordinate transformation unit 132 uses the results calculated by the moving average unit.

The moving average unit reduces random angle-measuring errors by adopting the moving average of multiple epochs.

Hereafter, a concrete example is indicated in which the moving average unit adopts a moving average of five epochs for each of the Doppler velocity Vs and the Doppler arrival angle $\alpha$, as indicated in [Expression 2]. As the concrete example, when the millimeter wave symbol is updated in 10Hz units, the moving average unit retains data from the past four epochs, calculates the moving average of 5 piece of data that is the sum of the current epoch and the past four epochs according to the operation indicated in [Expression 2], and outputs the values calculated in 10Hz units.

[Expression 2]

$$Vs = \frac{Vs(n-4) + Vs(n-3) + Vs(n-2) + Vs(n-1) + Vs(n)}{5}$$

$$\alpha = \frac{\alpha(n-4) + \alpha(n-3) + \alpha(n-2) + \alpha(n-1) + \alpha(n)}{5}$$

The point cloud generation unit 120 converts the point cloud of relative coordinates into a point cloud of absolute coordinates, and adds the data representing the map composed of the point cloud converted to the map data 190. The point cloud generation unit 120 may update at least a part of the map data 190 based on the map composed of the point cloud converted.

The target position input unit 141 accepts input of a target position from an upper system or a user.

The route planning unit 142 transmits data representing each waypoint indicated in the route planned to the guide control unit 143.

The guide control unit 143 guides the object vessel 20 to pass through each waypoint represented by the data received from the route planning unit 142 in order.

Note that, in each of the generation of the map and the setting of each waypoint, areas occupied by other vessels may be taken into consideration.

The GNSS/INS integrated navigation device 200 includes a GNSS antenna 29, a GNSS receiver 30, the IMU 40, a strap down calculation unit 220, a satellite observation data estimation unit 230 and an error estimation unit 240, as illustrated in Fig. 3. The GNSS/INS integrated navigation device 200 appropriately utilizes the technique disclosed in Reference Literature 4. The GNSS/INS integrated navigation device 200 is also referred to as a GNSS/INS integrated positioning device.

[Reference Literature 4]

JP2012-193965 A

The IMU 40, which is also referred to as an inertial sensor, measures each of acceleration in three axis directions and angular velocity in three axis directions. The three axis directions refer to the length direction, the width direction, and the height direction of a movable body. Hereafter, the acceleration in three axis directions is referred to as "three-dimensional acceleration", and the angular velocity in three axis directions is referred to as "three-dimensional angular velocity". The IMU 40 includes an acceleration sensor 41 and an angular velocity sensor 42. The object vessel 20 and the IMU 40 integrally form a rigid body.

The acceleration sensor 41 measures acceleration.

The angular velocity sensor 42 measures angular velocity of azimuth angles.

The GNSS receiver 30 receives signals received by the GNSS antenna 29.

The strap down calculation unit 220 calculates the velocity, the position, the attitude and the azimuth based on the data obtained by the acceleration sensor 41 and the data obtained by the angular velocity sensor 42. The concrete example of the strap down calculation unit 220 is described in Reference Literature 4.

The satellite observation data estimation unit 230 estimates observation data by the GNSS.

The error estimation unit 240 estimates an error included in positioning data by the GNSS based on the data received from the automatic docking device 100 or a magnetic azimuth sensor 60, and the position, the velocity and the attitude calculated by the strap down calculation unit 220. The error estimation unit 240 includes a high-precision positioning calculation unit 241.

The high-precision positioning calculation unit 241 estimates an error using a Kalman filter, for example, and corrects the position, the velocity and the attitude of the object vessel 20 based on the estimation result.

The GNSS receiver 30, the IMU 40 and a positioning processor form the GNSS/INS integrated navigation device 200. The positioning processor is a processor that performs calculation for positioning. The GNSS receiver 30 receives positioning reinforcement information from a quasi-zenith satellite or via radio communication. The GNSS receiver 30 performs correction process of a positioning signal received from the GNSS satellite based on the positioning reinforcement information, and performs centimeter-level high-precision position orientation.

The magnetic azimuth sensor 60 is a relatively simple sensor that determines azimuths using the geomagnetic field of the earth, for example. The GNSS/INS integrated navigation device 200 may correct the positioning result by the GNSS/INS integrated navigation device 200 based on the azimuth observed by the magnetic azimuth sensor 60.

A switch 61 is a switch to toggle between output from the magnetic azimuth sensor 60 and output from the radar/Body coordinate transformation unit 132. The switch 61 is switched by the upper system or the user.

The object vessel 20 may have the magnetic azimuth sensor 60 installed instead of the millimeter wave radar 50 to measure the azimuth. Hereinafter, a description will be given on a case where the GNSS/INS integrated navigation device 200 utilizes the output from the magnetic azimuth sensor 60.

The GNSS/INS integrated navigation device 200 uses the angular velocity calculated from the temporal change in azimuth measured by the magnetic azimuth sensor 60 instead of the velocity and the angular velocity measured by the millimeter wave radar 50. The azimuth data being the output from the magnetic azimuth sensor 60 is converted into angular velocity data by executing the operation indicated in [Expression 3]. Here, $\Delta\Psi$ indicates the angular velocity data at time t+1, $\Psi$t indicates the azimuth data at time t, and $\Psi$t+1 indicates the azimuth data at the time t+1. $\Delta\Psi$ corresponds to the angular velocity calculated from the temporal change in azimuth measured by the magnetic azimuth sensor 60.

[Expression 3]

$$\Delta\psi = \psi_{t+1} - \psi_t$$

When the magnetic azimuth sensor 60 is used, it is impossible to correct the velocity error as compared to a case of using the millimeter wave radar 50. However, the high-precision positioning calculation unit 241 corrects the angular velocity error of the strap down calculation unit 220. Therefore, in this case, since it is possible to avoid the phenomenon where the value of azimuth drifts due to errors in the gyroscope, etc., ranging for the position of the object vessel 20 can be performed with relatively high accuracy.

There are few items such as steel towers, buildings, and automobiles that are magnetized around the object vessel 20. Therefore, by using the magnetic azimuth sensor 60 instead of the millimeter wave radar 50, it is possible to achieve an effect equivalent to that obtained in the case of using the millimeter wave radar 50.

Note that the automatic docking system 90 may use both the millimeter wave radar 50 and the magnetic azimuth sensor 60.

Furthermore, the millimeter wave radar 50 may not always be able to capture the pier during the time from the start of approaching to docking. Therefore, when the position relation between the millimeter wave radar 50 and the docking berth meets certain conditions, a map is generated, and a route plan is generated based on the map generated and the position of the vessel. Then, the vessel berths based on each waypoint indicated in the route plan, and orientation of the self position and calculation of attitude by the GNSS/INS integrated navigation device 200. The certain conditions are, for example, the measurement distance between the millimeter wave radar 50 and the docking berth being 21m or below, and the docking berth existing within a range where the angle from the center of antenna of the millimeter wave radar 50 is from -45° to +45°.

It is possible to improve the accuracy of velocity and attitude calculation by the GNSS/INS integrated navigation device 200 by inputting velocities on each of the X-axis and Y-axis in the Body coordinate system that can be detected by the millimeter wave radar 50 into the GNSS/INS integrated navigation device 200.

By assigning absolute coordinates based on the position, the velocity, and the attitude indicated in the positioning result by the GNSS/INS integrated navigation device 200 to the ranging points by the millimeter wave radar 50, a three-dimensional map indicating absolute coordinates is created in real time.

The navigation scenario generation unit 140 generates a navigation scenario indicating a route that avoids obstacles and has a relatively short navigation distance based on the three-dimensional map generated in real time.

Further, the navigation scenario generation unit 140 updates and corrects the navigation scenario each time based on the position and the attitude indicated in the positioning results by the GNSS/INS integrated navigation device 200.

The GNSS/INS integrated navigation device 200 functions as a position and attitude orientation device 300. The position and attitude orientation device 300 orients the position of a movable body equipped with the GNSS receiver 30, the millimeter wave radar 50, the acceleration sensor 41 and the angular velocity sensor 42. The position and attitude orientation device 300 uses the data obtained from the GNSS receiver 30, the data obtained from the IMU 40, and the data obtained from the millimeter wave radar 50, and orients each of the position, the attitude and the azimuth of the movable body. The position and attitude orientation device 300 is also referred to as a self-position and attitude orientation device.

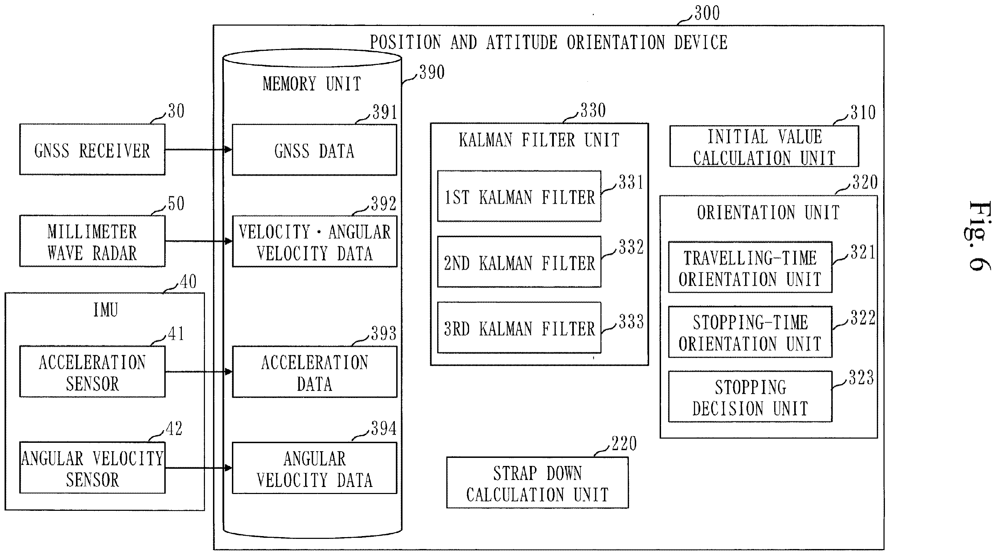

Fig. 6 illustrates an example of a functional configuration of the position and attitude orientation device 300. As illustrated in Fig. 6, the position and attitude orientation device 300 includes an initial value calculation unit 310, an orientation unit 320, a Kalman filter unit 330, the strap down calculation unit 220 and a memory unit 390.

The initial value calculation unit 310 controls the Kalman filter unit 330, and calculates the initial value of azimuth angle.

Specifically, the initial value calculation unit 310 first calculates the azimuth angle of the object vessel 20 as the first navigation azimuth angle, based on the angular velocity of the azimuth angle measured by the angular velocity sensor 42. Next, the initial value calculation unit 310 calculates the change amount in two-dimensional coordinate by integrating the velocity and the angular velocity measured by the millimeter wave radar 50 based on the first navigation azimuth angle calculated. Then, the initial value calculation unit 310 calculates the two-dimensional coordinate value of the object vessel 20 as the first navigation coordinate value by adding the change amount calculated to the initial value of the two-dimensional position. The initial value of two-dimensional position is the initial position of the navigation coordinate system. Subsequently, the initial value calculation unit 310 calculates a correction value to correct the first navigation azimuth angle using the first Kalman filter, based on the first navigation coordinate value calculated and the two-dimensional coordinate value contained in the coordinate value positioned by the GNSS receiver 30. Then, the initial value calculation unit 310 corrects the first navigation azimuth angle using the correction value calculated, and outputs the first navigation azimuth angle after correction as an initial value of azimuth angle. That is, the initial value calculation unit 310 calculates the initial value of azimuth angle being the initial value of the azimuth angle of the object vessel 20 based on the measured value of the angular velocity sensor 42, the measured value of the millimeter wave radar 50, and the positioning result of the GNSS receiver 30. More specifically, the initial value calculation unit 310 calculates the first navigation azimuth angle based on the angular velocity measured by the angular velocity sensor 42, calculates the two-dimensional first navigation coordinate value based on the first navigation azimuth angle calculated, the velocity and the angular velocity measured by the millimeter wave radar 50, and the initial value of two-dimensional position, and calculates the initial value of the azimuth angle by correcting the first navigation azimuth angle based on the two-dimensional first navigation coordinate value calculated and the positioning result by the GNSS receiver 30.

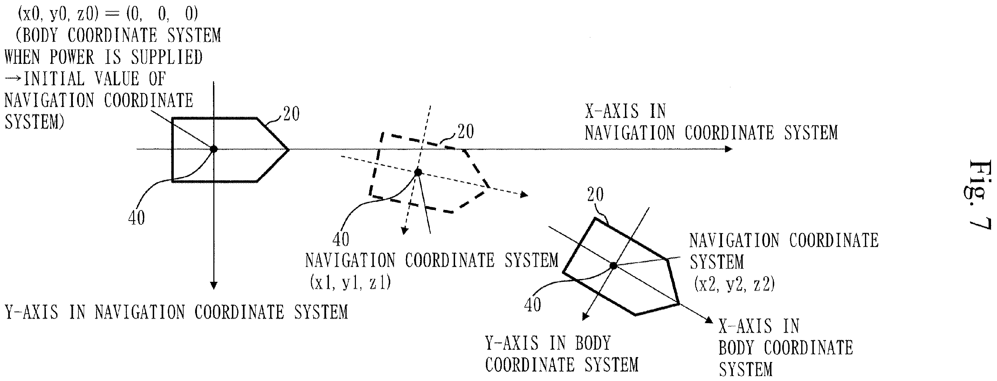

Here, the coordinate system will be described using Fig. 7.

The initial position of the navigation coordinate system is at the center position of the IMU 40 when the power is turned on. In a normal case, (0, 0) is set as "initial value of two-dimensional position", and (0, 0, 0) is set as "initial value of three-dimensional position".

Further, as illustrated in Fig. 7, the X-axis, the Y-axis and the Z-axis in the Body coordinate system in the initial attitude angle of the object vessel 20 shall be the X-axis, the Y-axis and the Z-axis in the navigation coordinate system, respectively. In this case, the position of the object vessel 20 in the two-dimensional navigation coordinate system is calculated by adding the amount of movement of the object vessel 20 on the X-axis and the Y-axis in the Body coordinate system. Further, the position of the object vessel 20 in the three-dimensional navigation coordinate system is calculated by adding the amount of movement of the object vessel 20 on the X-axis, the Y-axis and the Z-axis in the Body coordinate system.

The Body coordinate system is, as illustrated in Fig. 7, a coordinate system where the center of the IMU 40 is the origin, the forward direction of the object vessel 20 is the X-axis, the right direction with respect to the forward direction of the object vessel 20 is the Y-axis, and the vertical downward direction of the object vessel 20 is the Z-axis.

The orientation unit 320 includes a travelling-time orientation unit 321, a stopping-time orientation unit 322 and a stopping decision unit 323. The orientation unit 320 orients the position of the object vessel 20 based on the measured values of the angular velocity sensor 42, the initial values of azimuth angle, the measured values of the acceleration sensor 41, and the positioning results of integrated navigation of the GNSS receiver 30. More specifically, the orientation unit 320 orients the position of the object vessel 20 by calculating the amount of change in azimuth angle based on the angular velocity of the azimuth angle measured by the angular velocity sensor 42, calculating the second navigation azimuth angle based on the amount of change in azimuth angle calculated and the initial value of azimuth angle, calculating the three-dimensional second navigation coordinate value based on the second navigation azimuth angle calculated, the acceleration measured by the acceleration sensor 41, and the initial value of the three-dimensional position, and correcting the second navigation coordinate value based on the three-dimensional second navigation coordinate value calculated and the positioning result of the GNSS receiver 30. The initial value of the three-dimensional position is an initial position of the navigation coordinate system.

The travelling-time orientation unit 321 controls the Kalman filter unit 330 and the strap down calculation unit 220 to orient (calculate) the position, the attitude, and the azimuth of the object vessel 20 while the object vessel 20 is travelling. The travelling-time orientation unit 321 is also referred to as an orientation value calculation unit.

The stopping-time orientation unit 322 controls the Kalman filter unit 330 and the strap down calculation unit 220, and orients the position, the attitude, and the azimuth of the object vessel 20 while the object vessel 20 is stopping. The stopping-time orientation unit 322 is also referred to as an azimuth angle correction unit.

The stopping decision unit 323 decides whether the object vessel 20 is stationary or has started moving.

Specifically, the orientation unit 320 first calculates the amount of change in azimuth angle based on the angular velocity of the azimuth angle measured by the angular velocity sensor 42, and calculates the azimuth angle of the object vessel 20 as the second navigation azimuth angle based on the amount of change in azimuth angle calculated and the initial value of azimuth angle outputted. Then, the orientation unit 320 transforms the three-dimensional acceleration measured by the acceleration sensor 41 into three-dimensional acceleration in the navigation coordinate system based on the second navigation azimuth angle calculated. Next, the orientation unit 320 calculates the three-dimensional coordinate value of the object vessel 20 as the second navigation coordinate value by calculating the amount of change in the three-dimensional coordinates by integrating the three-dimensional acceleration after transformation, and by adding the amount of change calculated to the initial value of the three-dimensional position. Then, the orientation unit 320 calculates a correction value to correct the second navigation coordinate value using a second Kalman filter based on the second navigation coordinate value calculated and the three-dimensional coordinate value positioned by the GNSS receiver 30. Then, the orientation unit 320 corrects the second navigation coordinate value using the correction value calculated, and outputs the second navigation coordinate value after correction as the position orientation value corresponding to the oriented position of the object vessels 20.

In addition, when the object vessel 20 which has been travelling stops, the orientation unit 320 calculates an azimuth angle correction value to correct the second navigation azimuth angle calculated this time using a third Kalman filter based on the second navigation azimuth angle calculated last time and the second navigation azimuth angle calculated this time, and calculates the second navigation azimuth angle after correction by correcting the second navigation azimuth angle calculated this time using the azimuth angle correction value calculated. Here, the third Kalman filter calculates a correction value to match the second navigation azimuth angle calculated last time and the second navigation azimuth angle calculated this time as an azimuth angle correction value. The third Kalman filter generates an observation equation representing the difference between the second navigation azimuth angle calculated last time and the second navigation azimuth angle calculated this time, and calculates an azimuth angle correction value using the observation equation generated.

Further, when the object vessel 20 which has been stationary resumes movement, the orientation unit 320 first calculates a new second navigation azimuth angle based on the second navigation azimuth angle after correction and the amount of change in the new azimuth angle, and based on the new second navigation azimuth angle calculated, transforms the new three-dimensional acceleration measured by the acceleration sensor 41 into three-dimensional acceleration in the navigation coordinate system. Next, the orientation unit 320 calculates the amount of change in three-dimensional coordinate by integrating the three-dimensional acceleration after transformation and adds the amount of change calculated to the second navigation coordinate value calculated last time, thereby calculating a new second navigation coordinate value. Then, the orientation unit 320 calculates a position correction value to correct the new second navigation coordinate value using the second Kalman filter based on the new second navigation coordinate value calculated and the new three-dimensional coordinate value determined the position by the GNSS receiver 30, corrects the new second navigation coordinate value using the position correction value calculated, and outputs the new second navigation coordinate value after correction as a new position orientation value.

The orientation unit 320 decides that the object vessel 20 has stopped moving when the velocity measured by the millimeter wave radar 50 is less than a predetermined velocity threshold. When the velocity measured by the millimeter wave radar 50 is equal to or above the velocity threshold after deciding that the object vessel 20 has stopped moving, the orientation unit 320 decides that the object vessel 20 has resumed moving.

The Kalman filter unit 330 generates at least one of an observation equation and a state equation, and calculates a correction value of each type of data using at least one of the observation equation generated and the state equation generated.

The Kalman filter unit 330 includes a first Kalman filter 331, a second Kalman filter 332, and a third Kalman filter 333 as multiple Kalman filters where the observation equations are different from one another.

The satellite observation data estimation unit 230 performs the processing contained in the Kalman filter unit 330.

The error estimation unit 240 corresponds to the first Kalman filter 331, the second Kalman filter 332, and the third Kalman filter 333.

The strap down calculation unit 220 calculates the velocity, the position, the attitude and the azimuth based on acceleration data 393 and angular velocity data 394. A specific example of the strap down calculation unit 220 is described in Patent Literature 1.

A memory unit 390 stores GNSS data 391, velocity and angular velocity data 392, the acceleration data 393 and the angular velocity data 394.

The GNSS data 391 is composed of data observed by the GNSS receiver 30.

The velocity and angular velocity data 392 is composed of data indicating the velocity and the angular velocity observed by the millimeter wave radar 50.

The acceleration data 393 is composed of data observed by the acceleration sensor 41.

The angular velocity data 394 is composed of data observed by the angular velocity sensor 42.

In a case where the position and attitude orientation device 300 uses output from the magnetic azimuth sensor 60 instead of the output from the millimeter wave radar 50, the position and attitude orientation device 300 uses azimuth data instead of the velocity and angular velocity data 392. In other words, in this case, the position and attitude orientation device 300 uses the angular velocity calculated from the temporal change in azimuth measured by the magnetic azimuth sensor 60 instead of the velocity and the angular velocity measured by the millimeter wave radar 50.

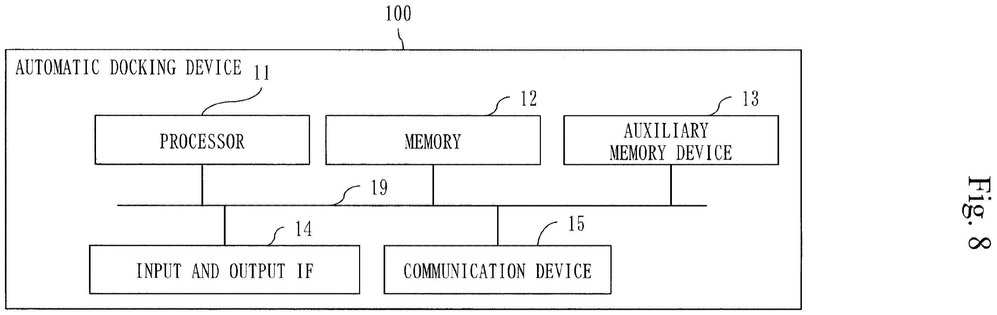

Fig. 8 illustrates an example of a hardware configuration of the automatic docking device 100 according to the present embodiment. The automatic docking device 100 is composed of a computer. The automatic docking device 100 may be composed of multiple computers.

The automatic docking device 100 is a computer equipped with hardware components such as a processor 11, a memory 12, an auxiliary memory device 13, input and output IF (Interface) 14, a communication device 15 and the like, as illustrated in the present diagram. These hardware components are appropriately connected via a signal line 19.

The processor 11 is an IC (Integrated Circuit) that performs arithmetic processing, and also controls hardware components included in the computer. The processor 11 is, for example, a CPU (Central Processing Unit), a DSP (Digital Signal Processor), or a GPU (Graphics Processing Unit).

The automatic docking device 100 may include multiple processors to replace the processor 11. The multiple processors share the roles of the processor 11.

The memory 12 is typically a volatile memory device, and is a RAM (Random Access Memory), for instance. The memory 12 is also referred to as a main storage device or a main memory. The data stored in the memory 12 is stored in the auxiliary memory device 13 as needed.

The auxiliary memory device 13 is typically a non-volatile storage device, and for example, is a ROM (Read Only Memory), an HDD (Hard Disk Drive), or a flash memory. The data stored in the auxiliary memory device 13 is loaded into the memory 12 as needed.

The memory 12 and the auxiliary memory device 13 may integrally form one unit.

The input and output IF 14 is a port to which an input device and an output device are connected. The input and output IF 14 is, for instance, a USB (Universal Serial Bus) terminal. The input devices are, for example, a keyboard and a mouse. The output device is a display, for example.

The communication device 15 is a receiver and a transmitter. The communication device 15 is a communication chip or an NIC (Network Interface Card), for example.

Each part of the automatic docking device 100 may appropriately use the input and output IF 14 and the communication device 15 in communicating with other devices, etc.

The auxiliary memory device 13 stores an automatic docking program. The automatic docking program is a program that causes a computer to realize the functions of each part included in the automatic docking device 100. The automatic docking program is loaded into the memory 12, and is executed by the processor 11. The functions of each part included in the automatic docking device 100 are realized by software.

The data used in executing the automatic docking program, and the data and the like obtained by executing the automatic docking program are appropriately stored in a storage device. Each part of the automatic docking device 100 appropriately uses the storage device. The storage device is composed of at least one of the memory 12, the auxiliary memory device 13, registers in the processor 11, and cache memory in the processor 11, for example. Note that the terms data and information may sometimes have equivalent meanings. The storage device may be independent from the computer.

The functions of the memory 12 and the auxiliary memory device 13 may be realized by other storage devices.

The automatic docking program may be recorded on a non-volatile computer-readable recording medium. The non-volatile recording medium is an optical disc or a flash memory, for example. The automatic docking program may also be provided as a program product.

\*\*\*Description of Operation\*\*\*

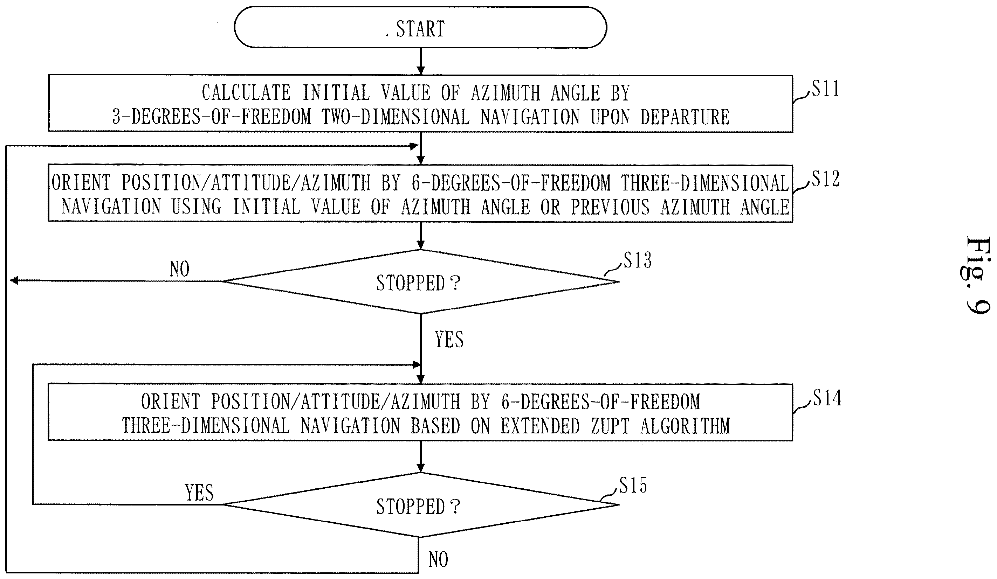

Fig. 9 is a flowchart illustrating an example of the operation of the position and attitude orientation device 300. A description will be given on the operation of the position and attitude orientation device 300 using Fig. 9.

(Step S11)

The initial value calculation unit 310 calculates the initial value of the azimuth angle at the time of departure of the object vessel 20, using 3-degrees-of-freedom two-dimensional navigation.

(Step S12)

The travelling-time orientation unit 321 orients each of the position, the attitude, and the azimuth of the object vessel 20 through 6-degrees-of-freedom three-dimensional navigation, using the initial value of azimuth angle or the azimuth angle oriented recently until the object vessel 20 stops.

(Step S13)

When the object vessel 20 is stationary, the position and attitude orientation device 300 proceeds to Step S14. In other cases, the position and attitude orientation device 300 proceeds to Step S12.

(Step S14)

The stopping-time orientation unit 322 orients each of the position, the attitude, and the azimuth of the object vessel 20 through the 6-degrees-of-freedom three-dimensional navigation based on an extended ZUPT (Zero Velocity Update) algorithm while the object vessel 20 is stationary. The outline of the extended ZUPT algorithm is disclosed in Patent Literature 1.

(Step S15)

When the object vessel 20 is stationary, the position and attitude orientation device 300 proceeds to Step S14. In other cases, the position and attitude orientation device 300 proceeds to Step S12.

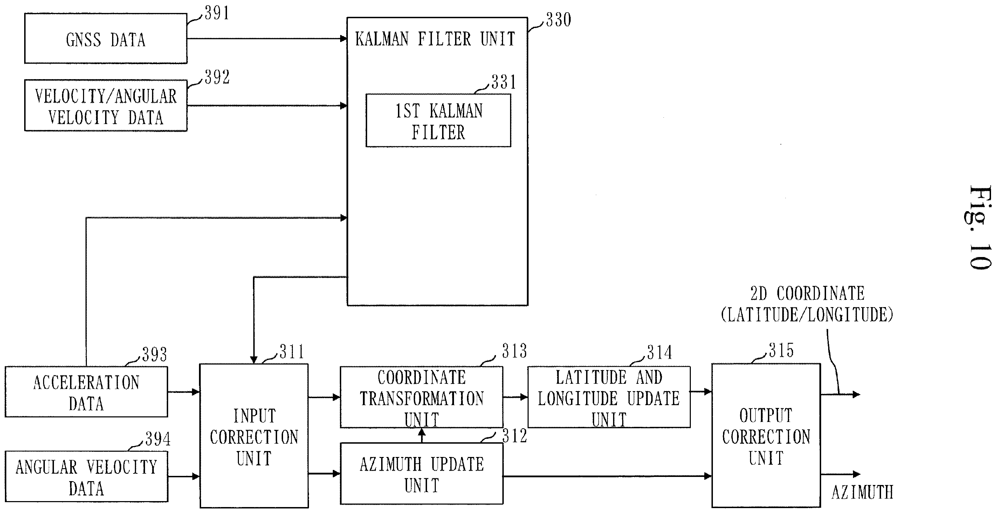

Fig. 10 illustrates the algorithm of the 3-degrees-of-freedom two-dimensional navigation according to First Embodiment. The algorithm is the same as the algorithm indicated in Fig. 7 of Patent Literature 1. Hereafter, a description will be given on Fig. 10. Note that the initial value calculation unit 310 includes an input correction unit 311, an azimuth update unit 312, a coordinate transformation unit 313, a latitude and longitude update unit 314, and an output correction unit 315.

The input correction unit 311 corrects the velocity (velocity vector) indicated in the velocity and angular velocity data 392 by adding the correction value calculated by the Kalman filter unit 330 to the velocity indicated in the velocity and angular velocity data 392.

Furthermore, the input correction unit 311 corrects the angular velocity of the azimuth angle by adding the correction value calculated by the Kalman filter unit 330 to the angular velocity of "azimuth angle" indicated in the angular velocity data 394.

The azimuth update unit 312 calculates the amount of change in azimuth angle by integrating for one time the angular velocity of the azimuth angle corrected by the input correction unit 311. The azimuth update unit 312 calculates a new azimuth angle by adding the amount of change in azimuth angle calculated to the initial value of the azimuth angle, or to the azimuth angle calculated last time by the output correction unit 315. Here, the initial value of the azimuth angle may be any appropriate value.

The coordinate transformation unit 313 transforms the velocity corrected by the input correction unit 311, from the values in the sensor coordinate system to the values in the navigation coordinate system based on the attitude and the azimuth calculated by the azimuth update unit 312 by using a predetermined transformation equation. In this manner, a two-dimensional velocity in the navigation coordinate system is obtained. The two-dimensional velocity is composed of a velocity in the latitude direction and a velocity in the longitude direction.

The latitude and longitude update unit 314 calculates the amount of change in two-dimensional coordinate by integrating for one time the two-dimensional velocity obtained by the coordinate transformation unit 313. The two-dimensional coordinate is composed of latitude component and longitude component. The latitude and longitude update unit 314 calculates a new two-dimensional coordinate by adding the amount of change in two-dimensional coordinate calculated to the initial value of the two-dimensional coordinate, or to the two-dimensional coordinate calculated by the output correction unit 315 last time.

As a concrete example, the latitude and longitude update unit 314 uses the two-dimensional coordinate value positioned by the GNSS receiver 30 before departure of the object vessel 20, that is, while the object vessel 20 is stationary, as the initial value of the two-dimensional coordinate.

First, the Kalman filter unit 330 calculates the difference between the two-dimensional coordinate indicated in the GNSS data 391 and the two-dimensional coordinate calculated by the latitude and longitude update unit 314 as "coordinate residual".

Next, the Kalman filter unit 330 calculates the difference between the two-dimension velocity indicated in the GNSS data 391 and the two-dimensional velocity obtained by the coordinate transformation unit 313 as "velocity residual".

Then, the Kalman filter unit 330 calculates each of a correction value for the velocity, a correction value for the angular velocity, a correction value for the two-dimensional coordinate, and a correction value for the azimuth angle by executing the first Kalman filter 331 using the coordinate residual and the velocity residual calculated, as input.

The output correction unit 315 corrects the two-dimensional coordinate value by adding the correction value calculated by the Kalman filter unit 330 to the two-dimensional coordinate value calculated by the latitude and longitude update unit 314, and outputs the two-dimensional coordinate value corrected.

Furthermore, the output correction unit 315 corrects the azimuth angle by adding the correction value calculated by the Kalman filter unit 330 to the azimuth angle calculated by the azimuth update unit 312, and outputs the azimuth angle corrected.

As mentioned above, the 3-degrees-of-freedom two-dimensional navigation uses the velocity measured by the millimeter wave radar 50 instead of the acceleration measured by the acceleration sensor 41, thus avoiding integration errors in the velocity. Furthermore, even if the initial value of the azimuth angle is inappropriate, an appropriate value for the azimuth angle can be quickly obtained. This is because the angular velocity measured by the millimeter wave radar 50 is used instead of the angular velocity measured by the angular velocity sensor 42.

Therefore, according to the 3-degrees-of-freedom two-dimensional navigation, calculation of integration to obtain the two-dimensional coordinate is completed in only one step, the impact of errors in the initial value of the azimuth angle used in coordinate transformation of velocity is relatively small, and in addition, each of the two-dimensional coordinate value and the azimuth angle can be corrected appropriately by using the Kalman filter.

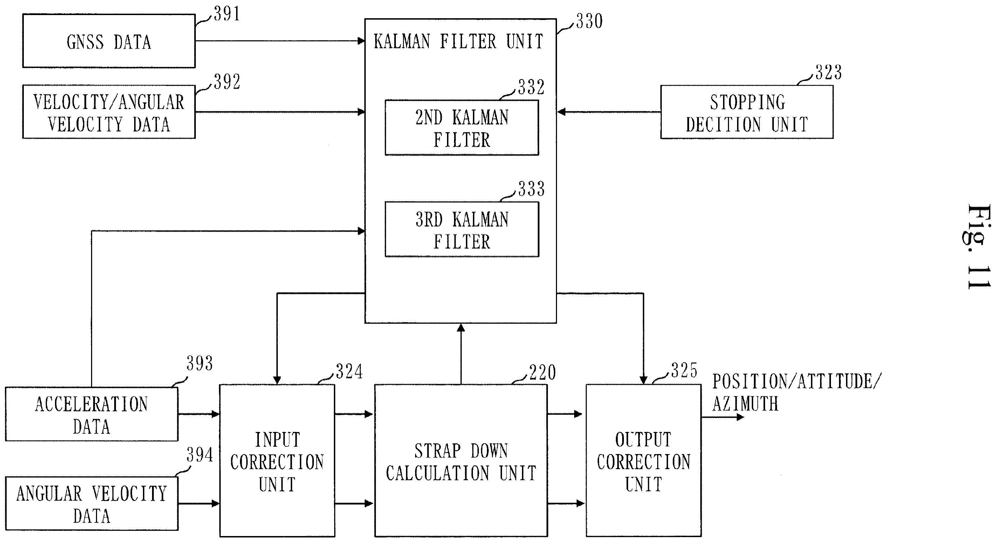

Fig. 11 illustrates an algorithm for 6-degrees-of-freedom three-dimensional navigation according to First Embodiment. The algorithm is the same as the algorithm illustrated in Fig. 9 of Patent Literature 1. Hereinafter, Fig. 11 will be described. Note that the orientation unit 320 includes an input correction unit 324 and an output correction unit 325.

The input correction unit 324 corrects a three-dimensional acceleration by adding the correction value calculated by the Kalman filter unit 330 to the three-dimensional acceleration indicated in the acceleration data 393.

In addition, the input correction unit 324 corrects the three-dimensional angular velocity by adding the correction value calculated by the Kalman filter unit 330 to the three-dimensional angular velocity indicated in the angular velocity data 394.

The strap down calculation unit 220 calculates each of the position, the attitude and the azimuth of the object vessel 20 using the three-dimensional acceleration corrected by the input correction unit 324, and the three-dimensional angular velocity corrected by the input correction unit 324.

The output correction unit 325 corrects a position by adding the correction value calculated by the Kalman filter unit 330 to the position calculated by the strap down calculation unit 220, and outputs the position corrected, as the position of the orientation result.

In addition, by adding the correction value calculated by the Kalman filter unit 330 to an attitude calculated by the strap down calculation unit 220, the output correction unit 325 corrects the attitude, and outputs the attitude corrected as the attitude angle of the orientation result.

Furthermore, by adding the correction value calculated by the Kalman filter unit 330 to an azimuth calculated by the strap down calculation unit 220, the output correction unit 325 corrects the direction, and outputs the azimuth corrected as the azimuth angle of the orientation result.

The stopping decision unit 323 decides whether the object vessel 20 is stationary based on the velocity calculated from the observation result by the millimeter wave radar 50.

The Kalman filter unit 330 calculates a difference between a position indicated in the GNSS data 391 and a position calculated by the strap down calculation unit 220 as "position residual" when the object vessel 20 is not stationary.

Next, the Kalman filter unit 330 calculates a difference between a velocity indicated in the velocity and angular velocity data 392 and a velocity calculated by the strap down calculation unit 220 as "velocity residual", and calculates a difference between an angular velocity indicated in the velocity and angular velocity data 392 and an angular velocity calculated by the strap down calculation unit 220 as "angular velocity residual".

Then, the Kalman filter unit 330 calculates each of a correction value for the three-dimensional acceleration, a correction value for the three-dimensional angular acceleration, a correction value for the position, and a correction value for the attitude by executing the second Kalman filter 332 by using the position residual and the velocity residual calculated as input.

In Step S14, the third Kalman filter 333 that employs an extended ZUPT algorithm is executed in 6-degrees-of-freedom three-dimensional navigation.

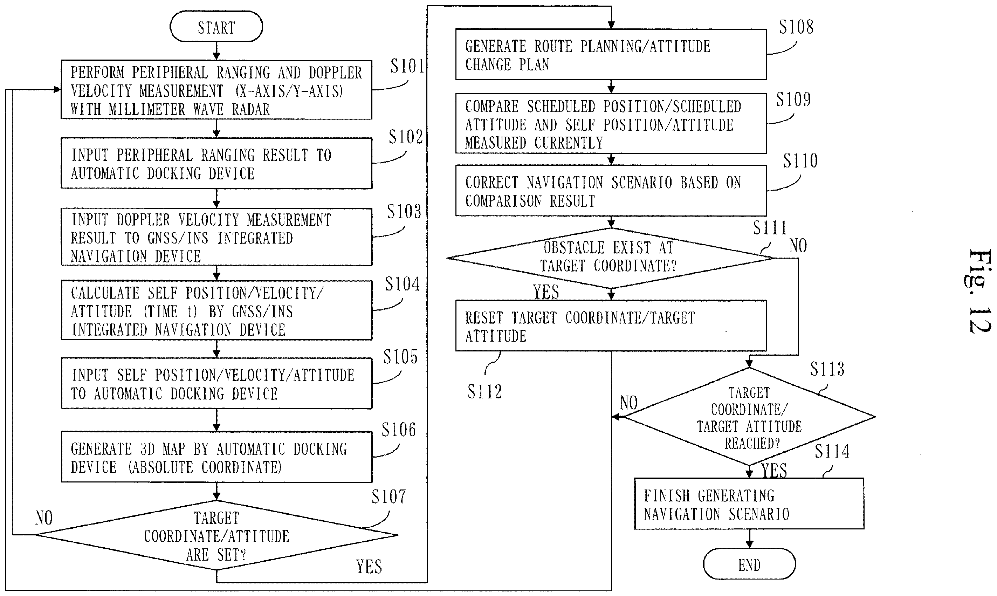

Fig. 12 is a flowchart illustrating an example of the process to generate a navigation scenario in the automatic docking system 90. A description will be given on the process to create the navigation scenario using Fig. 12. The operation procedures of each device provided in the automatic docking system 90 correspond to an automatic docking method. Furthermore, the program that realizes the operation of each device provided in the automatic docking system 90 corresponds to an automatic docking program.

(Step S101)

Each of the millimeter wave radars 50 performs ranging of surroundings of each millimeter wave radar 50, and measures the Doppler velocities with respect to the X-axis and the Y-axis.

(Step S102)

Each millimeter wave radar 50 inputs the result of ranging the surroundings of each millimeter wave radar 50 to the automatic docking device 100.

(Step S103)

The automatic docking device 100 inputs the measurement result of the Doppler velocity by each millimeter wave radar 50 to the GNSS/INS integrated navigation device 200.

(Step S104)

The GNSS/INS integrated navigation device 200 calculates the position, the velocity, and the attitude of the object vessel 20 at the time t.

(Step S105)

The GNSS/INS integrated navigation device 200 inputs the position, the velocity, and the attitude of the object vessel 20 calculated to the automatic docking device 100.

(Step S106)

The point cloud generation unit 120 generates a three-dimensional map indicating absolute coordinates as the map data 190 based on the data inputted from each of the millimeter wave radars 50 and the data inputted from the GNSS/INS integrated navigation device 200.

(Step S107)

When the target coordinate and the target attitude are set, the automatic docking system 90 proceeds to Step S108. In other cases, the automatic docking system 90 returns to Step S101.

(Step S108)

The route planning unit 142 generates a route plan and an attitude change plan that avoid obstacles and being reasonable, as a navigation scenario to reach the target coordinate with the target attitude, based on the three-dimensional map generated and the current position, velocity, and attitude of the object vessel 20.

(Step S109)

The route planning unit 142 compares each of a scheduled position and a scheduled attitude in the navigation scenario generated with the position and the attitude of the object vessel 20 measured currently.

(Step S110)

The route planning unit 142 corrects the navigation scenario based on the comparison result in Step S109.

(Step S111)

If there is an obstacle at the target coordinate, the automatic docking system 90 proceeds to Step S112. Otherwise, the automatic docking system 90 proceeds to Step S113.

(Step S112)

The route planning unit 142 resets the coordinate and the attitude that can avoid obstacles near the target coordinate, as the target coordinate and the target attitude, respectively.

(Step S113)

In the navigation scenario, when the object vessel 20 reaches the target coordinate and the target attitude, the automatic docking system 90 proceeds to Step S114. Otherwise, the automatic docking system 90 returns to Step S101.

(Step S114)

The automatic docking system 90 ends generation of the navigation scenario.

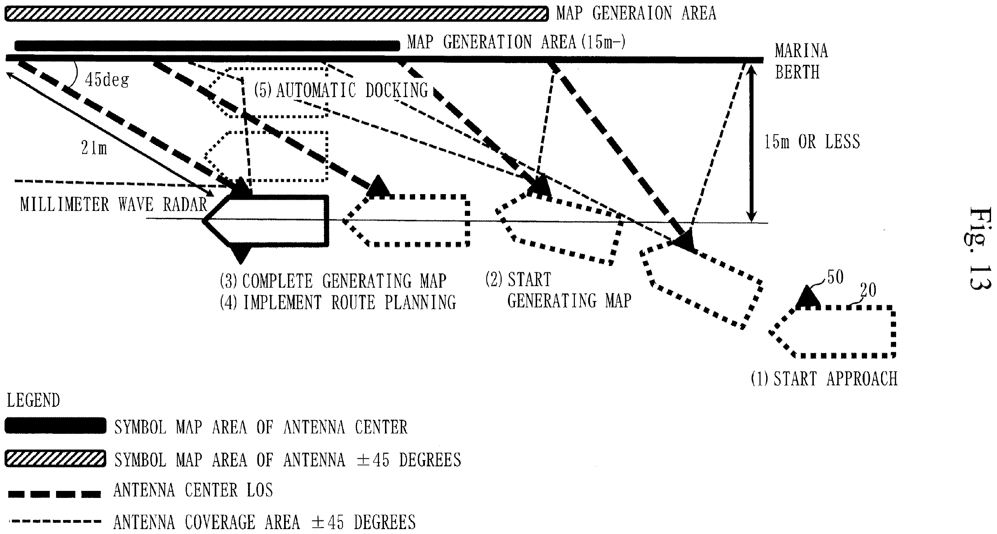

Fig. 13 is a diagram describing an operation sequence of the automatic docking system 90 in a use case 1. The use case 1 is a case where a high-end cruiser with two engines docks at a service berth as a concrete example. The use case 1 corresponds to a basic use case that can be realized most easily. A description will be given on a concrete example of the use case 1 using Fig. 13. In the present example, the common MAKLINK method is employed.
Fig. 13 illustrates each of an area of the symbol map corresponding to the center of the antenna, an area of the symbol map corresponding to the area within the range of $\pm$ 45 degrees from the center of the antenna, an LOS at the center of the antenna, and a range of $\pm$ 45 degrees from the antenna coverage area. LOS is an abbreviation for Line Of Sight.

(1) Start Approaching

The object vessel 20 starts docking approach to the marina berth.

(2) Start map generation

The object vessel 20 starts map generation at a point where the separation from the marina berth is 15m. The object vessel 20 generates a map while moving parallel to the pier of the marina berth.

(3) Complete Map Generation

The object vessel 20 proceeds straight for about one to two ship lengths while generating the map, and completes the map generation.

(4) Implement Route Planning

The object vessel 20 carries out route planning based on the map generated, and the position and the attitude of the object vessel 20. Note that the target position and the target attitude of the object vessel 20 are assumed to be set.

(5) Automatic docking

The object vessel 20 performs automatic docking based on the route plan implemented.

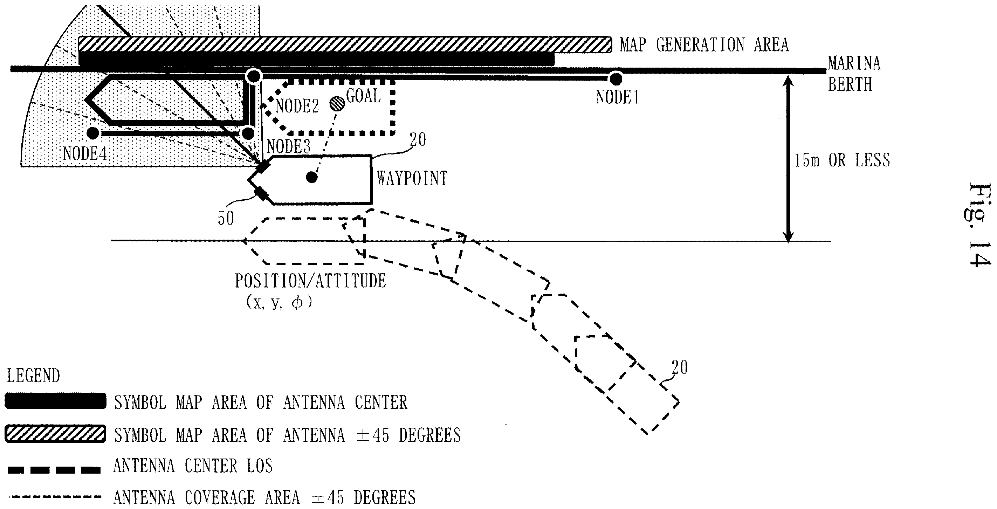

Fig. 14 is a diagram that describes the operation sequence of the automatic docking system 90 in the use case 1, which expresses a concrete example of a waypoint and a map. In the present example, the target coordinate and the target attitude are indicated, and additionally, other vessels exist as obstacles in the marina berth. In the present example, the map indicates multiple nodes. The line that connects each of two adjacent nodes indicates an unnavigable line. The unnavigable line represents the edge of the area into which the object vessel 20 cannot enter, and corresponds to the boundary between the navigable area and the unnavigable area. Each node represents the observation result by the millimeter wave radar 50, indicating a part of the quay, pier, or obstacles, as concrete examples. In Fig. 14, the area on the side of the object vessel 20 with respect to the unnavigable line is the navigable area.

Furthermore, when a difference in map shape is detected during implementation of automatic docking, the object vessel 20 immediately stops the automatic docking. The difference in map shape is a difference between the unnavigable line indicated in the map generated before the implementation of automatic docking, and the unnavigable line based on the result observed by the millimeter wave radar 50 during the implementation of automatic docking. As a specific example, a difference in map shape occurs when other vessels that were docked before the implementation of automatic docking start moving. In the present embodiment, since the map is in an absolute coordinate system, it is always possible to verify the similarity between a past map and a current map, and to detect a difference in map shape. On the other hand, it is impossible to verify the similarity between a past map and a current map with the existing techniques since the map is in a relative coordinate system. Note that the unnavigable line may also have a three-dimensional aspect.

After confirming the safety of the area surrounding the object vessel 20 by the upper system or the user, the automatic docking system 90 updates the map based on the observation results by the millimeter wave radar 50, and resumes from the operation sequence (4).

In other words, while the object vessel 20 is being guided, the object radar performs ranging in the object berth, and the GNSS/INS integrated navigation device 200 performs positioning of the position and the attitude of the object vessel 20. While the object vessel 20 is being guided, the point cloud generation unit 120 generates an updated map based on the result of the ranging in the object berth by the object radar, and the result of performing positioning of the position and the attitude of the object vessel 20 by the GNSS/INS integrated navigation device 200. The updated map is a map that indicates the navigable area in the object berth, and that indicates absolute coordinates. If there is a difference between the navigable area indicated in the updated map and the navigable area indicated in the object map, the navigation scenario generation unit 140 stops guiding the object vessel 20.

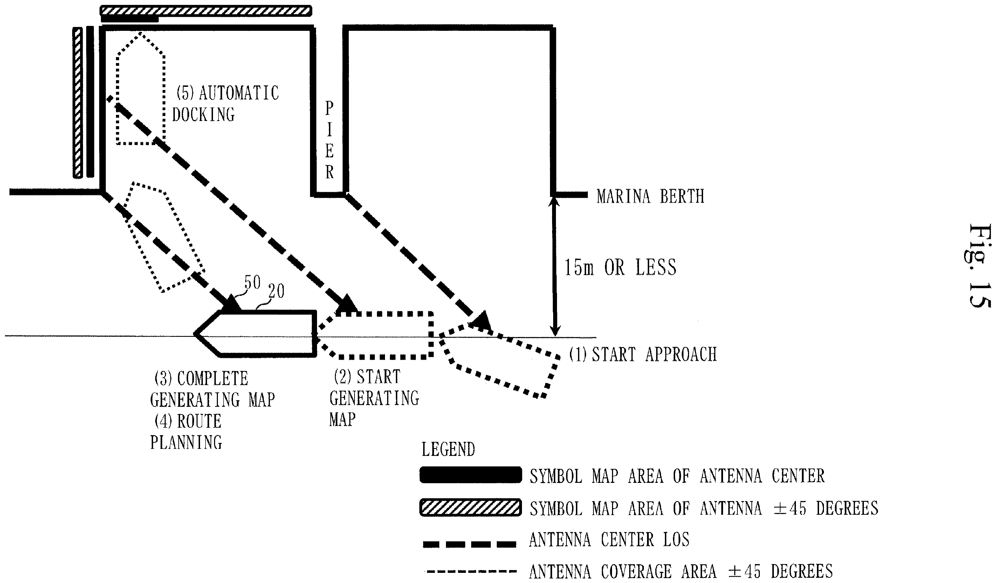

Fig. 15 is a diagram describing the operation sequence of the automatic docking system 90 in a use case 2. The use case 2 is a case where a high-end cruiser with two engines is docking at a home port berth, as a concrete example. The use case 2 corresponds to a standard case during actual operation. The flow of the process in the use case 2 is similar to that in the use case 1.

Note that in the use case 1, the object vessel 20 can considerably approach the quay wall to generate a map. However, in the use case 2, there is a risk that the object vessel 20 may collide with the pier when trying to approach the quay wall. Therefore, it is necessary for the user or the upper system, etc., to change the docking mode according to the use case. The user may set the use case using the input and output device. A use case in the vicinity of the target position may be automatically set based on the target position by referring to a correspondence table of use cases based on the target position set in advance.

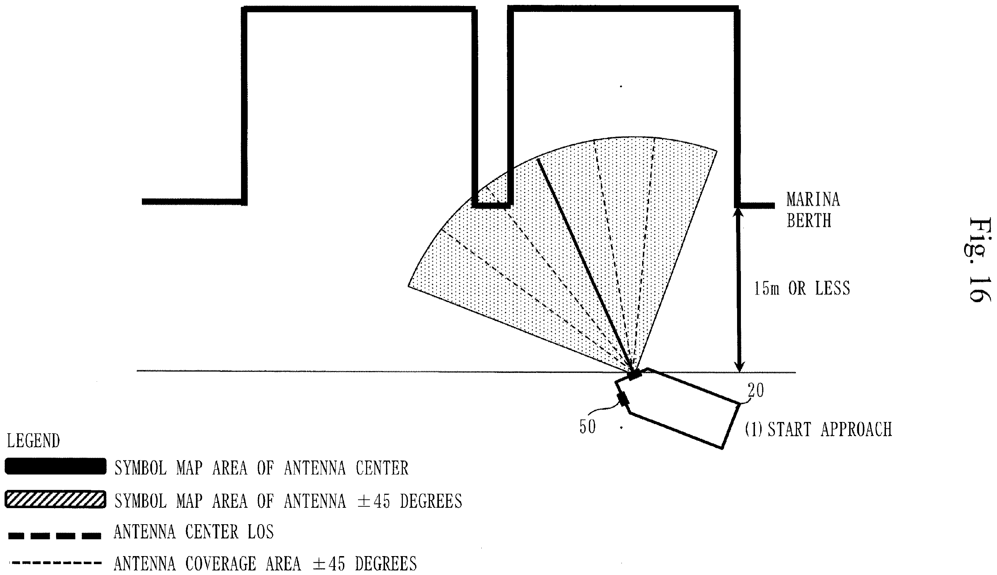

Fig. 16 through Fig. 20 are diagrams chronologically describing the operation sequence of the automatic docking system 90 in the use case 2. A description will be given on concrete examples of the operation sequence using Fig. 16 through Fig. 20. In the present example, the common MAKLINK method is employed.

(1) Start approach

The object vessel 20 heads toward the direction where the quay wall exists to search for the edge of the pier, as illustrated in Fig. 16. Moreover, the docking mode of the object vessel 20 is set to a mode corresponding to the use case 2.

(2) Start map generation

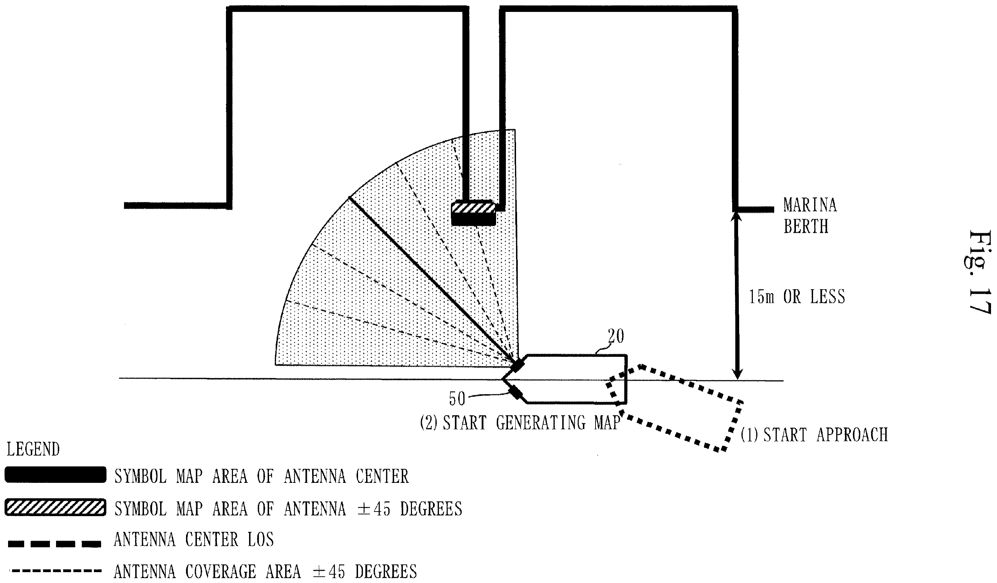

The object vessel 20 proceeds in the direction where the edge of the berth is believed to exist in order to search for the edge of the berth after observing the edge of the pier, as illustrated in Fig. 17.

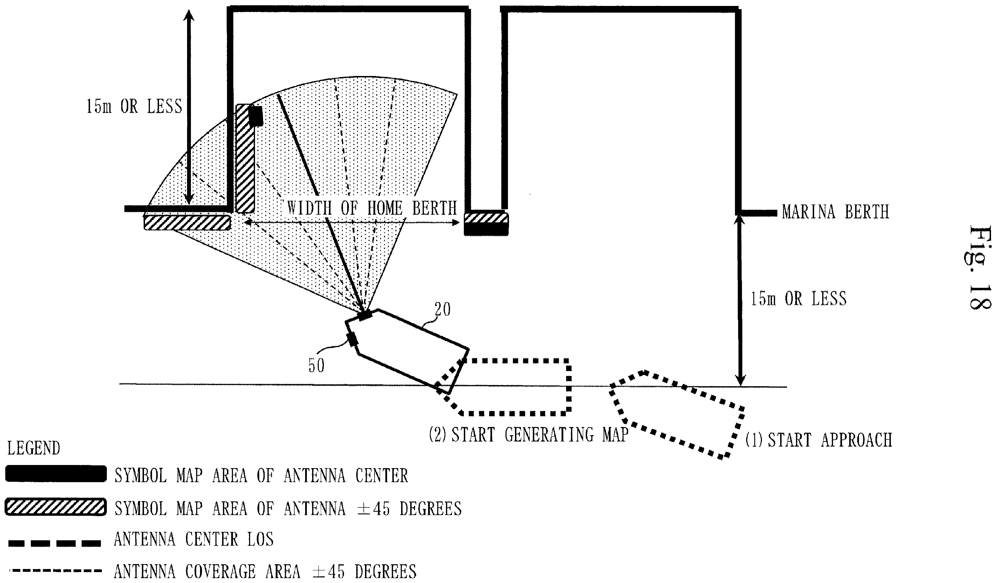

The object vessel 20, as illustrated in Fig. 18, moves to search in the home port berth detected after the width of the home port berth is identified. The width of the home port berth is calculated based on the edge of the pier observed and the edge of the berth observed.

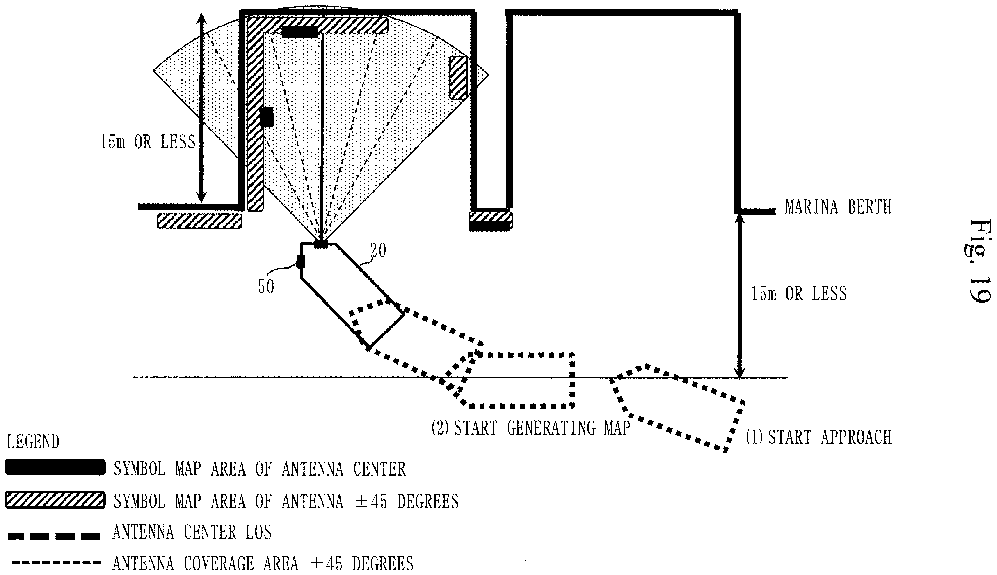

The object vessel 20 enters the home port berth detected and maps the shape of the home port berth, as illustrated in Fig. 19.

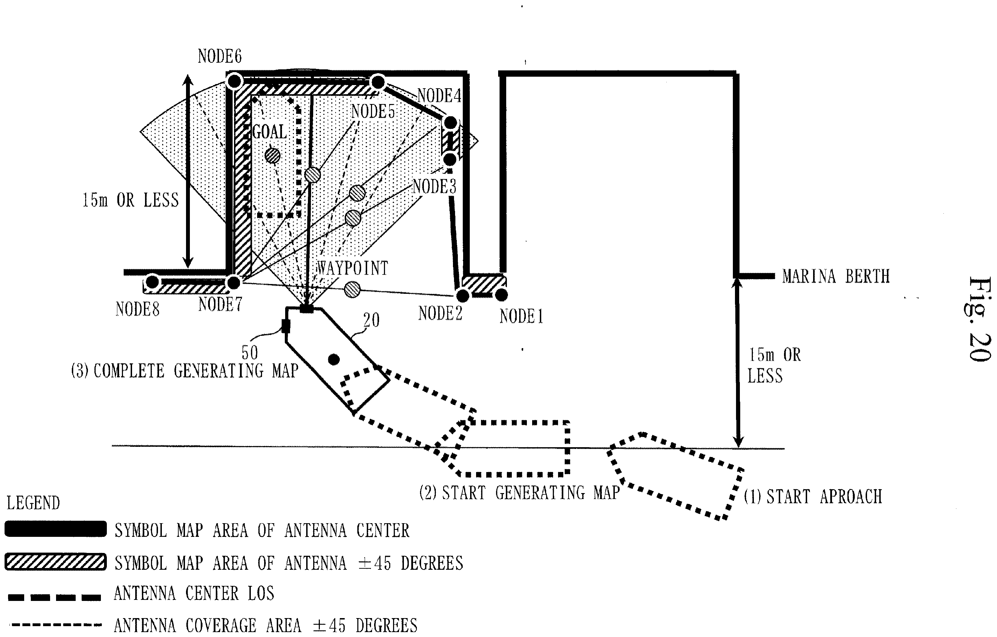

The subsequent process is the same as that in the use case 1. Note that Fig. 20 illustrates the map generated, the target coordinate and the target attitude, and each waypoint indicated in the route planned.

***Description of Effect of First Embodiment***

According to the present embodiment, a map indicating the docking position is automatically generated in real time, thus it is unnecessary to register the docking position beforehand, and further according to the present embodiment, even when other vessels are moored at a berth, it is possible to dock at an arbitrary berth while automatically avoiding other vessels.

According to the present embodiment, since it is possible to generate a navigation scenario based on absolute coordinates, in operations where the docking position is fixed as with operations of cruisers, it is possible to specify the docking coordinates in advance from the upper system for control, and the like. Therefore, there is no need for the user to manually set the docking coordinates. However, when the docking position is changed, it is also possible for the user to manually set the coordinates of the docking position.

According to the present embodiment, the docking position can be specified in the absolute coordinates. Therefore, according to the present embodiment, it is also possible to generate a navigation scenario in an area, for which the map is not generated, outside the area where ranging is not performed by the millimeter wave radar 50.

***Other Configurations***

<First Variation>

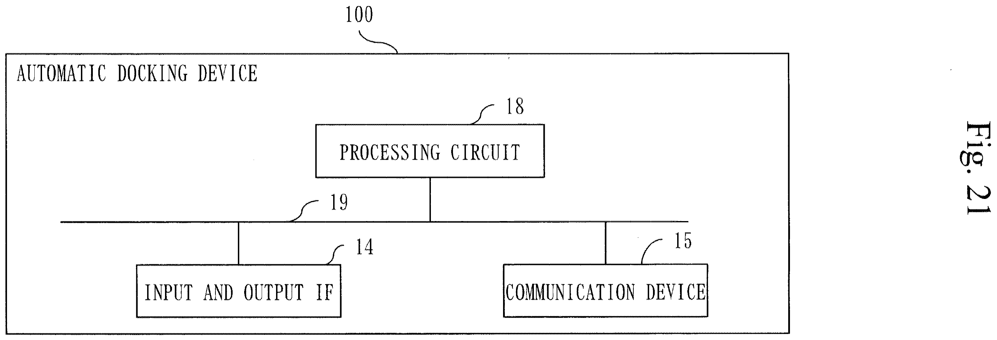

Fig. 21 illustrates an example of the hardware configuration of the automatic docking device 100 according to the present variation.

The automatic docking device 100 includes a processing circuit 18 instead of the processor 11, the processor 11 and the memory 12, the processor 11 and the auxiliary memory device 13, or the processor 11, the memory 12 and the auxiliary memory device 13.

The processing circuit 18 is a piece of hardware that realizes at least part of each unit included in the automatic docking device 100.

The processing circuit 18 may be a dedicated hardware component, or may be a processor that executes the programs stored in the memory 12.

In a case where the processing circuit 18 is the dedicated hardware component, the processing circuit 18 is, for example, a single circuit, a composite circuit, a programmed processor, a parallel-programmed processor, an ASIC (Application Specific Integrated Circuit), an FPGA (Field Programmable Gate Array), or a combination thereof.

The automatic docking device 100 may include multiple processing circuits to replace the processing circuit 18. These multiple processing circuits share the roles of the processing circuit 18.

In the automatic docking device 100, some functions may be realized by a dedicated hardware component, and the remaining functions may be realized by software or firmware.

The processing circuit 18 is realized by hardware, software, firmware, or a combination thereof, as a concrete example.

The processor 11, the memory 12, the auxiliary memory device 13, and the processing circuit 18 are collectively referred to as "processing circuitry". That is, the functions of each functional component of the automatic docking device 100 are realized by processing circuitry.

***Other Embodiments***

Although First Embodiment has been described, it is also permissible to combine and implement multiple parts of the present embodiment. Alternatively, it is also permissible to partially implement the present embodiment. Otherwise, various changes may be made to the present embodiment as needed, and the present embodiment may be combined and implemented totally or partially in any manner of combination.

Note that the embodiment as described above is an essentially preferable example, and is not intended for limiting the scope of the present disclosure, the application thereof, and the scope of use. The procedures described by using the flowcharts and the like may be changed appropriately.

Reference Signs List

11: processor; 12: memory; 13: auxiliary memory device; 14: input and output IF; 15: communication device; 18: processing circuit; 19: signal line; 20: object vessel; 29: GNSS antenna; 30: GNSS receiver; 40: IMU; 41: acceleration sensor; 42: angular velocity sensor; 50: millimeter wave radar; 51: synthesizer; 52: oscillator; 53: millimeter wave transmission and reception antenna; 54: mixer; 55: signal processing unit; 56: symbol capture and tracking unit; 60: magnetic azimuth sensor; 61: switch; 90: automatic docking system; 100: automatic docking device; 110: data collection unit; 120: point cloud generation unit; 121: point cloud extraction unit; 122: coordinate transformation unit; 123: map generation unit; 130: velocity azimuth detection unit; 131: velocity profile unit; 132: radar/Body coordinate transformation unit; 140: navigation scenario generation unit; 141: target position input unit; 142: route planning unit; 143: guide control unit; 190: map data; 200: GNSS/INS integrated navigation device; 220: strap down calculation unit; 230: satellite observation data estimation unit; 240: error estimation unit; 241: high-precision positioning calculation unit; 300: position and attitude orientation device; 310: initial value calculation unit; 311: input correction unit; 312: azimuth update unit; 313: coordinate transformation unit; 314: latitude and longitude update unit; 315: output correction unit; 320: orientation unit; 321: travelling-time orientation unit; 322: stopping-time orientation unit; 323: stopping decision unit; 324: input correction unit; 325: output correction unit; 330: Kalman filter unit; 331: first Kalman filter; 332: second Kalman filter; 333: third Kalman filter; 390: memory unit; 391: GNSS data; 392: velocity and angular velocity data; 393: acceleration data; 394: angular velocity data.

## Claims

1. An automatic docking device to control, in an object berth, automatic docking of an object vessel that includes a GNSS (Global Navigation Satellite System)/INS (Inertial Navigation System) integrated navigation device, and an object radar to perform a ranging of a relative position of an object existing in a surrounding with an electromagnetic wave, the automatic docking device comprising:

   a point cloud generation unit to transform a relative coordinate corresponding to each point of a point cloud corresponding to a result of the ranging in the object berth by the object radar into an absolute coordinate, based on a result of a positioning of a position and an attitude of the object vessel by the GNSS/INS integrated navigation device, and to generate an object map being a map indicating a navigable area in the object berth and indicating an absolute coordinate, based on the absolute coordinate corresponding to the each point transformed; and
   a navigation scenario generation unit to generate a plan to guide the object vessel so as to reach a target position with a target attitude based on the object map, and the position and the attitude of the object vessel positioned by the GNSS/INS integrated navigation device when the target position and the target attitude of the object vessel in the object berth are designated based on the object map.

2. The automatic docking device as defined in claim 1, wherein when the object radar performs the ranging in the object berth, a distance between the object vessel and a quay wall of the object berth is a distance in accordance with a shape of the object berth.

3. The automatic docking device as defined in claim 1 or claim 2, wherein the object radar is a millimeter wave radar.

4. The automatic docking device as defined in claim 3, wherein when the each point of the point cloud is regarded as an object point, a distance between the millimeter wave radar and the object point satisfies a ranging reference distance condition, and an angle between a center of the millimeter wave radar and the object point satisfies a ranging reference angle condition at a point of time when the ranging of the object point is performed by the millimeter wave radar.

5. The automatic docking device as defined in claim 3 or claim 4,
   wherein the GNSS/INS integrated navigation device corrects a positioning result by the GNSS/INS integrated navigation device based on a velocity and an azimuth observed by the millimeter wave radar.

6. The automatic docking device as defined in any one of claim 1 through claim 5, wherein

   the object vessel includes a magnetic azimuth sensor, and
   the GNSS/INS integrated navigation device corrects a positioning result by the GNSS/INS integrated navigation device based on an azimuth observed by the magnetic azimuth sensor.

7. The automatic docking device as defined in any one of claim 1 through claim 6, wherein

   the navigation scenario generation unit guides the object vessel in accordance with a plan generated,
   the object radar performs the ranging in the object berth, and the GNSS/INS integrated navigation device performs the positioning of a position and an attitude of the object vessel while the object vessel is being guided,
   the point cloud generation unit generates an updated map being a map indicating a navigable area in the object berth based on the result of the ranging in the object berth by the object radar, and the result of the positioning of the position and the attitude of the object vessel by the GNSS/INS integrated navigation device, the updated map being a map indicating an absolute coordinate, while the object vessel is being guided, and
the navigation scenario generation unit stops guiding of the object vessel when a difference exists between the navigable area indicated in the updated map, and the navigable area indicated in the object map.

8. An automatic docking system comprising:

the GNSS/INS integrated navigation device;
a millimeter wave radar being the object radar; and
the automatic docking device as defined in any one of claim 1 through claim 7.

9. An automatic docking method performed by an automatic docking device being a computer to control, in an object berth, automatic docking of an object vessel that includes a GNSS (Global Navigation Satellite System)/INS (Inertial Navigation System) integrated navigation device, and an object radar to perform a ranging of a relative position of an object existing in a surrounding with an electromagnetic wave, the automatic docking method comprising:

by the automatic docking device, transforming a relative coordinate corresponding to each point of a point cloud corresponding to a result of the ranging in the object berth by the object radar into an absolute coordinate, based on a result of a positioning of a position and an attitude of the object vessel by the GNSS/INS integrated navigation device, and generating an object map being a map indicating a navigable area in the object berth and indicating an absolute coordinate, based on the absolute coordinate corresponding to the each point transformed; and
by the automatic docking device, generating a plan to guide the object vessel so as to reach a target position with a target attitude based on the object map, and the position and the attitude of the object vessel positioned by the GNSS/INS integrated navigation device when the target position and the target attitude of the object vessel in the object berth are designated based on the object map.

10. An automatic docking program executed by an automatic docking device being a computer to control, in an object berth, automatic docking of an object vessel that includes a GNSS (Global Navigation Satellite System)/INS (Inertial Navigation System) integrated navigation device, and an object radar to perform a ranging of a relative position of an object existing in a surrounding with an electromagnetic wave, the automatic docking program comprising:

a point cloud generation process to transform a relative coordinate corresponding to each point of a point cloud corresponding to a result of the ranging in the object berth by the object radar into an absolute coordinate, based on a result of a positioning of a position and an attitude of the object vessel by the GNSS/INS integrated navigation device, and to generate an object map being a map indicating a navigable area in the object berth and indicating an absolute coordinate, based on the absolute coordinate corresponding to the each point transformed; and
a navigation scenario generation process to generate a plan to guide the object vessel so as to reach a target position with a target attitude based on the object map, and the position and the attitude of the object vessel positioned by the GNSS/INS integrated navigation device when the target position and the target attitude of the object vessel in the object berth are designated based on the object map.

# Fig. 1

# Fig. 2

Fig. 3

# Fig. 4

EXAMPLE OF VELOCITY PROFILE

※BLACK DOTS ARE MILLIMETER WAVE SYMBOLS

DOPPLER VELOCITY Vs [m/s]

Y-AXIS

X-AXIS

DOPPLER ARRIVAL ANGLE α [rad]

# Fig. 5

EXAMPLE OF RADAR/BODY COORDINATE TRANSFORMATION

# Fig. 6

POSITION AND ATTITUDE ORIENTATION DEVICE — 300

- 310 INITIAL VALUE CALCULATION UNIT
- 320 ORIENTATION UNIT
  - 321 TRAVELING-TIME ORIENTATION UNIT
  - 322 STOPPING-TIME ORIENTATION UNIT
  - 323 STOPPING DECISION UNIT
- 330 KALMAN FILTER UNIT
  - 331 1ST KALMAN FILTER
  - 332 2ND KALMAN FILTER
  - 333 3RD KALMAN FILTER
- 220 STRAP DOWN CALCULATION UNIT
- 390 MEMORY UNIT
  - 391 GNSS DATA
  - 392 VELOCITY · ANGULAR VELOCITY DATA
  - 393 ACCELERATION DATA
  - 394 ANGULAR VELOCITY DATA

- 30 GNSS RECEIVER
- 50 MILLIMETER WAVE RADAR
- 40 IMU
  - 41 ACCELERATION SENSOR
  - 42 ANGULAR VELOCITY SENSOR

$(x0, y0, z0) = (0, \ 0, \ 0)$
(BODY COORDINATE SYSTEM
WHEN POWER IS SUPPLIED
→INITIAL VALUE OF
NAVIGATION COORDINATE
SYSTEM)

X-AXIS IN
NAVIGATION COORDINATE SYSTEM

20

20

40

40
NAVIGATION COORDINATE SYSTEM
$(x1, y1, z1)$

Y-AXIS IN NAVIGATION COORDINATE SYSTEM

20

40

NAVIGATION COORDINATE
SYSTEM
$(x2, y2, z2)$

Y-AXIS IN BODY
COORDINATE SYSTEM

X-AXIS IN
BODY COORDINATE
SYSTEM

Fig. 7

# Fig. 8

AUTOMATIC DOCKING DEVICE 100

AUTOMATIC DOCKING DEVICE 11

PROCESSOR

MEMORY 12

AUXILIARY MEMORY DEVICE 13

19

14

INPUT AND OUTPUT IF

COMMUNICATION DEVICE 15

# Fig. 9

START

S11 — CALCULATE INITIAL VALUE OF AZIMUTH ANGLE BY 3-DEGREES-OF-FREEDOM TWO-DIMENSIONAL NAVIGATION UPON DEPARTURE

S12 — ORIENT POSITION/ATTITUDE/AZIMUTH BY 6-DEGREES-OF-FREEDOM THREE-DIMENSIONAL NAVIGATION USING INITIAL VALUE OF AZIMUTH ANGLE OR PREVIOUS AZIMUTH ANGLE

S13 — STOPPED ?

NO

YES

S14 — ORIENT POSITION/ATTITUDE/AZIMUTH BY 6-DEGREES-OF-FREEDOM THREE-DIMENSIONAL NAVIGATION BASED ON EXTENDED ZUPT ALGORITHM

S15 — STOPPED ?

YES

NO

# Fig. 10

# Fig. 11

Fig. 12

START

PERFORM PERIPHERAL RANGING AND DOPPLER VELOCITY MEASUREMENT (X-AXIS/Y-AXIS) WITH MILLIMETER WAVE RADAR — S101

INPUT PERIPHERAL RANGING RESULT TO AUTOMATIC DOCKING DEVICE — S102

INPUT DOPPLER VELOCITY MEASUREMENT RESULT TO GNSS/INS INTEGRATED NAVIGATION DEVICE — S103

CALCULATE SELF POSITION/VELOCITY/ ATTITUDE (TIME t) BY GNSS/INS INTEGRATED NAVIGATION DEVICE — S104

INPUT SELF POSITION/VELOCITY/ATTITUDE TO AUTOMATIC DOCKING DEVICE — S105

GENERATE 3D MAP BY AUTOMATIC DOCKING DEVICE (ABSOLUTE COORDINATE) — S106

TARGET COORDINATE/ATTITUDE ARE SET? — S107
NO / YES

GENERATE ROUTE PLANNING/ATTITUDE CHANGE PLAN — S108

COMPARE SCHEDULED POSITION/SCHEDULED ATTITUDE AND SELF POSITION/ATTITUDE MEASURED CURRENTLY — S109

CORRECT NAVIGATION SCENARIO BASED ON COMPARISON RESULT — S110

OBSTACLE EXIST AT TARGET COORDINATE? — S111
NO / YES

RESET TARGET COORDINATE/TARGET ATTITUDE — S112

TARGET COORDINATE/ TARGET ATTITUDE REACHED? — S113
NO / YES

FINISH GENERATING NAVIGATION SCENARIO — S114

END

MAP GENERAION AREA

MAP GENERATION AREA (15m-)

MARINA
BERTH

45deg

(5) AUTOMATIC DOCKING

15m OR LESS

21m

MILLIMETER WAVE RADAR

(3) COMPLETE GENERATING MAP
(4) IMPLEMENT ROUTE PLANNING

(2) START
GENERATING MAP

50
20

(1) START APPROACH

Fig. 13

LEGEND

SYMBOL MAP AREA OF ANTENNA CENTER

SYMBOL MAP AREA OF ANTENNA ±45 DEGREES

ANTENNA CENTER LOS

ANTENNA COVERAGE AREA ±45 DEGREES

Fig. 14

MAP GENERATION AREA

MARINA BERTH

NODE1

NODE2　GOAL

NODE3

NODE4

20

WAYPOINT

50

15m OR LESS

POSITION/ATTITUDE
(x, y, φ)

20

LEGEND

SYMBOL MAP AREA OF ANTENNA CENTER

SYMBOL MAP AREA OF ANTENNA ±45 DEGREES

ANTENNA CENTER LOS

ANTENNA COVERAGE AREA ±45 DEGREES

(5) AUTOMATIC DOCKING

P I E R

MARINA BERTH

15m OR LESS

50  20

(1) START APPROACH

(3) COMPLETE
GENERATING MAP
(4) ROUTE
PLANNING

(2) START
GENERATING
MAP

LEGEND

███████  SYMBOL MAP AREA OF ANTENNA CENTER

▨▨▨▨▨  SYMBOL MAP AREA OF ANTENNA ±45 DEGREES

━ ━ ━ ━  ANTENNA CENTER LOS

- - - - -  ANTENNA COVERAGE AREA ±45 DEGREES

Fig. 15

Fig. 16

MARINA
BERTH

15m OR LESS

20

50

(1) START APPROACH

LEGEND

■ SYMBOL MAP AREA OF ANTENNA CENTER

▨ SYMBOL MAP AREA OF ANTENNA ±45 DEGREES

▬ ▬ ▬ ▬ ANTENNA CENTER LOS

------------ ANTENNA COVERAGE AREA ±45 DEGREES

Fig. 17

MARINA
BERTH

15m OR LESS

20

50

(2) START GENERATING MAP

(1) START APPROACH

LEGEND

▬▬▬  SYMBOL MAP AREA OF ANTENNA CENTER

▨▨▨  SYMBOL MAP AREA OF ANTENNA ±45 DEGREES

▬ ▬ ▬  ANTENNA CENTER LOS

- - - - -  ANTENNA COVERAGE AREA ±45 DEGREES

Fig. 18

15m OR LESS

WIDTH OF HOME BERTH

MARINA BERTH

15m OR LESS

20

50

(2) START GENERATING MAP

(1) START APPROACH

LEGEND

SYMBOL MAP AREA OF ANTENNA CENTER

SYMBOL MAP AREA OF ANTENNA ±45 DEGREES

ANTENNA CENTER LOS

ANTENNA COVERAGE AREA ±45 DEGREES

EP 4 737 856 A1

Fig. 19

15m OR LESS

MARINA BERTH

15m OR LESS

20

50

(2) START GENERATING MAP

(1) START APPROACH

LEGEND

SYMBOL MAP AREA OF ANTENNA CENTER

SYMBOL MAP AREA OF ANTENNA ±45 DEGREES

ANTENNA CENTER LOS

ANTENNA COVERAGE AREA ±45 DEGREES

Fig. 20

NODE6

NODE4

NODE5

GOAL

15m OR LESS

NODE3

WAYPOINT

NODE8    NODE7

NODE2    NODE1

50

20

MARINA BERTH

(3) COMPLETE GENERATING MAP

15m OR LESS

(2) START GENERATING MAP

(1) START APROACH

LEGEND

SYMBOL MAP AREA OF ANTENNA CENTER

SYMBOL MAP AREA OF ANTENNA ±45 DEGREES

ANTENNA CENTER LOS

ANTENNA COVERAGE AREA ±45 DEGREES

Fig. 21

100

**AUTOMATIC DOCKING DEVICE**

18

PROCESSING CIRCUIT

19

14

INPUT AND OUTPUT IF

15

COMMUNICATION DEVICE

## INTERNATIONAL SEARCH REPORT

International application No.

**PCT/JP2023/023759**

| A. | CLASSIFICATION OF SUBJECT MATTER |
|---|---|

*G01C 21/12*(2006.01)i
FI:   G01C21/12

According to International Patent Classification (IPC) or to both national classification and IPC

| B. | FIELDS SEARCHED |
|---|---|

Minimum documentation searched (classification system followed by classification symbols)

G01C21/12

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | WO 2021/085274 A1 (YANMAR POWER TECHNOLOGY CO., LTD.) 06 May 2021 (2021-05-06)<br>     paragraphs [0027]-[0104] | 1, 3-6, 8-10 |
| A | | 2, 7 |

☐ Further documents are listed in the continuation of Box C.          ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 July 2023** | **08 August 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

## INTERNATIONAL SEARCH REPORT
### Information on patent family members

International application No.

**PCT/JP2023/023759**

| Patent document cited in search report | Publication date (day/month/year) | Patent family member(s) | Publication date (day/month/year) |
|---|---|---|---|
| WO 2021/085274 A1 | 06 May 2021 | EP 4053822 A1 paragraphs [0027]-[0104] | |

Form PCT/ISA/210 (patent family annex) (January 2015)

## REFERENCES CITED IN THE DESCRIPTION

**Patent documents cited in the description**

- JP 2022106753 A
- WO 2018100751 A1
- JP 2020059403 A
- JP 2012193965 A

**Non-patent literature cited in the description**

- **M. FISCHLER** ; **R. BOLLES**. Random sample consensus: a paradigm for model fitting with applications to image analysis and automated cartography. *Communications of the ACM*, 1981